# EUROPÄISCHE PATENTSCHRIFT

(11) **EP 3 937 837 B1**
(45) Veröffentlichungstag und Bekanntmachung des Hinweises auf die Patenterteilung: **17.07.2024**
(21) Anmeldenummer: 20711095.8
(22) Anmeldetag: 09.03.2020
(51) Int. Cl.: A61C 9/00, A61C 19/045

(54) **OBERKIEFER-ANLAGEELEMENT ZUR ANLAGE AN EINEM MENSCHLICHEN OBERKIEFER**
UPPER JAW CONTACT ELEMENT FOR CONTACT WITH A HUMAN UPPER JAW
ÉLÉMENT DE CONTACT DE MÂCHOIRE SUPÉRIEURE DESTINÉ À VENIR EN CONTACT AVEC UNE MÂCHOIRE SUPÉRIEURE HUMAINE

(30) Priorität: 13.03.2019 DE 102019106403; 30.08.2019 DE 102019123370
(43) Veröffentlichungstag der Anmeldung: 19.01.2022
(73) Patentinhaber: Schlieper, Jörg, 24558 Henstedt-Ulzburg (DE)
(72) Erfinder: Schlieper, Jörg, 24558 Henstedt-Ulzburg (DE)
(74) Vertreter: Schmitt-Nilson Schraud Waibel Wohlfrom Patentanwälte Partnerschaft mbB
(86) Internationale Anmeldenummer: PCT/EP2020/056137
(87) Internationale Veröffentlichungsnummer: WO 2020/182701

(56) Entgegenhaltungen:
- WO-A1-2019/043633
- WO-A1-98/26736
- US-A1- 2005 175 954

## Beschreibung

Die vorliegende Erfindung betrifft ein Oberkiefer-Anlageelement zur Anlage an einem menschlichen Oberkiefer.

Oberkiefer-Anlageelemente sind in der Zahnmedizin bekannt und zahlreich eingesetzt. Ein Einsatzzweck von Oberkiefer-Anlageelementen ist die Vermessung des Oberkiefers und/oder die Einstellung einer Kieferrelationsposition des Ober- und des Unterkiefers zueinander und/oder die Bereitstellung von Kieferrelationsdaten.

Die Bereitstellung von Kieferrelationsdaten, d.h., eine räumliche Relation beider Kiefer zueinander und damit die räumliche Relation der einzelnen Zahnkronen beider Kiefer zueinander, ist für die Herstellung von Schienen auf dem Gebiet der Zahnmedizin und Mund-Kiefer-Gesichtschirurgie, zur Anfertigung von Zahnersatz auf dem Gebiet der Prothetik, von Kieferregulierungen auf dem Gebiet der Kieferorthopädie, von Kiefergelenksschienen auf dem Gebiet der Funktionstherapie und von Unterkieferprotrusionsschienen auf dem Gebiet der zahnärztlichen Schlafmedizin unerlässlich.

Zur Erfassung der Kieferrelationsdaten wird zwischen einer statischen und einer dynamischen Kieferrelation unterschieden: Die statische Kieferrelation ist die Abbildung einer statischen Situation mittels statischen dreidimensionalen Positionsdaten, d.h., die Abbildung einer Relation der Position des Unterkiefers zum Oberkiefer. Die dynamische Kieferrelation ist die Abbildung eines dynamischen Situationsablaufs mittels dynamischen dreidimensionalen Positionsdaten, d.h., die Abbildung mehrerer Relationen der Position des Unterkiefers zum Oberkiefer innerhalb eines Bewegungsablaufs.

Sowohl die statische als auch die dynamische Kieferrelation lassen sich am Probanden mithilfe von Vorrichtungen durch passive oder aktive sowie analoge oder digitale Verfahren ermitteln bzw. registrieren. Bei den passiven Verfahren gibt der Untersucher, bspw. der Arzt, die Position und/oder die Bewegung des Unterkiefers des menschlichen Probanden, z.B. durch manuelle und/oder instrumentelle und/oder maschinelle Führung, vor. Das bedeutet, dass der Proband die statische bzw. dynamische Kieferrelation nicht selbstständig einnimmt bzw. durchführt. Im Gegensatz hierzu führt der Proband diese Bewegungen bei dem aktiven Verfahren selbstständig, ggf. nach Anweisung des Untersuchers, durch bzw. nimmt die Kieferrelationsstellung selbstständig ein. Es gibt auch Mischformen, bei denen der Proband bspw. selbstständig, d.h. aktiv, eine statische Kieferrelation einnimmt und in dieser passiv gehalten wird oder der Proband aktiv, aber unter Führung einen Situationsablauf durchführt oder der Proband passiv bei einer Bewegung aktiv unterstützt wird oder umgekehrt.

Die analogen bzw. digitalen Verfahren können nochmals unterschieden werden zwischen analogen bzw. digitalen Verfahren der statischen Kieferrelation und analogen bzw. digitalen Verfahren der dynamischen Kieferrelation. Bei einem analogen Verfahren der statischen Kieferrelation kommen ein Abdruck mit Abdruckmaterialien oder analoge Messsysteme zum Einsatz. Bei einem analogen Verfahren der dynamischen Kieferrelation kommen mehrere Abdrücke mit Abdruckmaterialien oder analoge Messsysteme zum Einsatz. Bei einem digitalen Verfahren der statischen oder der dynamischen Kieferrelation kommen digitale Messsysteme, wie bspw. Ultraschall, Hochfrequenz, oder Lichtscanner, insbesondere sogenannte Intraoralscanner, etc., zum Einsatz. Hierbei ist auch eine Kombination von analogen mit digitalen sowie passiven und aktiven Verfahren möglich. Dabei sind die jeweiligen Vorrichtungen auf das jeweilige Verfahren abzustimmen.

Die Vorrichtungen dienen in der Regel der Optimierung lediglich eines oder mehrerer dieser Verfahren und zur Nutzbarmachung der analogen und/oder digitalen Verfahren im Verfahrensablauf. Üblicherweise kommen als Vorrichtungen in solchen Verfahrensabläufen Bissgabeln zum Einsatz.

Aus der DE 103 31 531 A1 und der DE 42 92 389 B4 sind zwei Bissgabeln bekannt, die ein eingeschränktes aktives, statisches und ausschließlich analoges Verfahren zur Bestimmung der Kieferrelation unterstützen. Ein kombiniertes aktives/passives Verfahren ist nur in Bezug auf die Unterkieferprotrusion, also den Unterkiefervorschub bzw. die anterior-posterior Kieferrelation, möglich, wobei der Proband mit dem Unterkiefer eine aktive Protrusionsbewegung in eine bestimmte gewünschte Kieferrelation hinein durchführt, in der er dann mittels der Bissgabel quasi passiv gehalten wird. Eine variable Bisssperrung, welche ein vertikaler Abstand zwischen den Ober- und Unterkieferzähnen beschreibt, also eine craniocaudale Kieferrelation ist nicht einstellbar. Dies ist insofern ungünstig, als dass die Bissgabel händisch am Patienten für eine gewünschte Kiefersperrung (d.h., eine vertikale Kieferrelation bzw. der vertikale Abstand) umgearbeitet werden muss. Dies benötigt Zeit und ist zudem wegen des Arbeitens im Mund des Probanden für diesen unangenehm. Ist die Änderung erfolgt und entspricht nach der Kontrolle im Mund nicht den Anforderungen, so ist eine erneute Änderung (mit den genannten Nachteilen) erforderlich.

Ein weiterer Nachteil ergibt sich aus der ausschließlich analogen Registrierung der Kieferrelation mit Abdruckmaterial, wenn die Bisssperrung einen Intraoralscan gleichzeitig von Ober- und Unterkieferzähnen nicht mehr ermöglicht. Ferner eignen sich diese Bissgabeln nicht für ein sicheres Verfahren zur aktiven Registrierung, da keine sichere Fixierung von Oberkiefer- zu Unterkieferzähnen zustande kommt. Dies ist dadurch bedingt, dass die Vorrichtungen zur Verkippung neigen, da sie nur zwischen den Okklusalflächen, also den Kauflächen, der Oberkiefer- und Unterkieferzähne vermittelt mit Abdruckmasse positioniert werden, also nicht die gesamten Zahnkronen vermittelt mit Abdruckmaterial für eine bessere Retention umfassen. Insbesondere die in der DE 42 92 389 B4 offenbarte Bissgabel weist durch die Verwendung von zwei aufeinanderliegenden Elementen eine vergrößerte Bisssperrung zur Positionierung der Kieferrelation auf. Es ist zwar in der DE 103 31 531 A1 eine innenliegende Führung vorgesehen, die eine verkleinerte Bisssperrung ermöglicht, die jedoch unter Anwendung, der Bisskraft häufig nicht standhält.

Aus der DE 10 2014 102 770 A1 ist eine Vorrichtung bekannt, die ein aktives, dynamisches und digitales Verfahren zur Registrierung der Kieferrelation, jedoch kein passives, statisches oder dynamisches Verfahren (Fixierung bzw. Führung des Unterkiefers in einer bestimmten Position bzw. in einer bestimmten Bewegung zum Oberkiefer) unterstützt. Dies ist insofern ungünstig, als dass sich eine vom Probanden eingenommene Unterkieferposition während der Zeit der Registrierung der Kieferrelation (aktives Verfahren) verändern kann. Aufgrund fehlender Fixierung oder Abstützung der Unterkieferposition gegenüber dem Oberkiefer kommt es regelmäßig zu Abweichungen durch willkürliche bzw. unbeabsichtigte Bewegung des Unterkiefers des Probanden, wodurch eine analoge Registrierung mit z. B. Abdruckmaterial unmöglich wird.

Somit ist die Registrierung der Kieferrelation bei dieser Vorrichtung ausschließlich nach dem digitalen Verfahren möglich. Ferner ist die nicht direkt im Probandenmund zu registrierende räumliche Position der Bissgabel, und damit die Position der Registriereinrichtung in Bezug auf den Oberkiefer von Nachteil. Die Registriereinrichtung ist an einer Oberkieferbissgabel angebracht, deren räumliche Position zu den Zähnen bestimmt werden muss. Die Oberkieferbissgabel ruht vermittelt durch Abdruckmaterial auf den Oberkieferzahnkronen.

Für die räumliche Positionsbestimmung der Bissgabel zu den Zähnen muss die Bissgabel aus dem Mund des Probanden herausgenommen und der gesamte abdruckseitige Anteil der Bissgabel mit den Positionierungsmarkerelementen der Bissgabel scanoptisch für die Überlagerung mit dem Zahnkronenscan erfasst werden. Durch diesen analogen Schritt der Übertragung der analogen Information des Oberkieferzahnabdrucks in digitale Daten für die Überlagerung mit den digitalen Daten des Scans der Oberkieferzahnkronen verlässt dieses System den ausschließlich digitalen Arbeitsablauf, welcher nachfolgend auch als volldigitaler Arbeitsablauf bezeichnet wird, und führt zu Fehlern, welche sich später bei der Registrierung der Kieferrelation als Ungenauigkeiten auswirken können. Ferner ist die Oberkieferbissgabel derart an bzw. auf den Zahnkronen zu fixieren, dass sie für die räumliche Positionsbestimmung leicht von den Zahnkronen ablösbar ist. daraus resultiert eine häufig nicht ausreichend hohe Haftreibung, um ein Verrutschen der Oberkieferbissgabel, während der Positionseinnahme am Kiefer zu verhindern.

Die DE 10 2010 021 934 A1 offenbart ein Registriersystem zur aktiven, dynamischen und digitalen Erfassung der Kieferrelation. Eine im Mittelgesicht positionierte Messeinheit wird über eine paraokklusale Oberkieferbissgabel mit Messeinheit mittels elektronischer Sensoren schädelbezüglich justiert, so dass nach Wechseln der Messeinheit von der Oberkiefer- auf die Unterkieferparaokklusalbissgabel die Registrierung der Kieferrelation mit der Messeinheit im Mittelgesicht schädelbezüglich gelingt. Nachteilig ist hierbei die fehlende Möglichkeit des aktiven, statischen sowie analogen Verfahrens zur Registrierung der Kieferrelation und das Erfordernis einer dritten Messeinheit im Mittelgesicht.

Die bei der DE 10 2010 021 934 A1 zur Anwendung kommenden Paraokklusalbissgabeln sind in der Zahnmedizin weit verbreitet und bekannt. Grundsätzlich erfolgt die Herstellung derartiger Bissgabeln auf individuellen Kiefermodellen im zahntechnischen Labor und sind aufwendig und kostspielig. In der Herstellung vereinfachte und damit zeitsparendere und kostengünstigere Paraokklusalbissgabeln sind mechanisch weniger belastbar als die laborgefertigten Paraokklusalbissgabeln. Darüber hinaus ist die paraokklusale Bissgabel derart ausgebildet, dass sie die Zahnkronen im eingesetzten Zustand vollständig einfasst bzw. umgibt. Dies erzeugt, insbesondere am Oberkiefer im Molarbereich ein für den Patienten unangenehmes Gefühl bis hin zu einem Würgereiz, der während des gesamten Vorgangs zur Erfassung der Kieferrelation unterdrückt werden muss.

Intraoralscanner erhalten immer mehr Eingang in die zahnärztliche Praxis. Ein Intraoralscanner ist bspw. aus der DE 196 40 495 C2 bekannt. Derartige Scanner arbeiten nach dem fotooptischen Prinzip, wobei dreidimensionale Objekte oder Bewegungsabläufe über repetitive Fotos aus unterschiedlichen Perspektiven, die zu einem räumlichen Gesamtbild zusammengefügt werden, erfasst werden können.

Es sind Intraoralscanner bekannt, die ein statisches sowie ein dynamisches, analoges Verfahren zur Registrierung der Kieferrelation ermöglichen und diese über ein vorbestimmtes Dateiformat, bspw. STL-Format, einer CAD/CAM-Technologie zugänglich machen. Zur Registrierung wird der Scanner seitlich mit seiner Optik auf die Ober- und Unterkieferzahnreihen gerichtet, während der Unterkiefer Bewegungen durchführt (aktives und/oder passives, digitales, dynamisches Verfahren). Bedingt durch die Abmessung des Geräts für die intraorale Anwendung ist der Erfassungsbereich der Scanoptik auf etwas mehr als eine Zahnkronenbreite beschränkt. Dies ermöglicht die Registrierung von Kieferrelationen nur in einem sehr kleinen Bereich zwischen der Kieferrelation im Schlussbiss, also im maximalen Kontakt zwischen den Ober- und Unterkieferzähnen, und der Kieferrelation mit Bisssperrung, in dem die Scanoptik noch für die Registrierung ausreichende Zahnkronenanteile von Ober- und Unterkiefer erfassen kann.

Für die Registrierung des Zahnbogens, d.h., aller Zahnkronen in einem Kiefer, stellt der Intraoralscanner mittlerweile das Verfahren erster Wahl dar. Hierbei wird vom Untersucher der Erfassungsbereich des Scanners über alle Zahnkronenflächen des Probanden bewegt und die einzelnen Scans, also (digitale) Bilder bzw. Fotos, zu einem dreidimensionalen Gesamtbild, dem Bild des Oberkiefer- oder Unterkieferzahnbogens, ggf. einschließlich von Zahnfleisch- und angrenzenden Mundschleimhautanteilen, zusammengefügt.

Zur Registrierung des Zahnbogens benötigt der Intraoralscanner einige freiliegende Zahnkronen, um abhängig von deren Position im Kiefer, die Position der anderen Zahnkronen bestimmen zu können. Zur Einstellung einer Kieferrelationsposition ist es notwendig, dass das Anlage-Element fest genug an den Zahnkronen anhaftet, dass es durch in der Kieferrelationsposition herrschende Kräfte nicht verrutscht.

WO 98/26736 A1 betrifft eine Unterkiefervorschub- oder Positionierungsvorrichtung zur kurzzeitigen oder einmaligen Verwendung. Das Gerät hat eine obere Schale und eine untere Schale mit Abdruckmaterial, in das der Patient beißt. Das Abdruckmaterial und der optionale Klebstoff dienen dazu, die Schalen an den oberen und unteren Zähnen des Patienten und damit am Ober- und Unterkiefer des Patienten zu befestigen. Ein Verbindungsstück ist an einem hinteren Bereich der unteren Schale angebracht und verbindet sich einstellbar mit der oberen Schale in oder nahe der Mitte des vorderen Bereichs der oberen Schale, so dass das Verbindungsstück leicht manuell nach vorne gezogen und zeitweilig arretiert werden kann, um den Unterkiefer vorzuschieben.

Aufgabe der Erfindung ist es, ein Oberkiefer-Anlageelement zur Anlage an einem menschlichen Oberkiefer bereitzustellen, das einen sicheren Halt am Oberkiefer während der Einstellung einer Kieferrelationsposition und/oder einer Kieferrelationsbewegung in eine Kieferrelationsposition und/oder während der Registrierung bzw. Erfassung der Kieferrelationsposition, bspw. mittels Intraoralscanner ermöglicht und für den Patienten komfortabel einsetzbar ist.

Die Aufgabe wird bei einem gattungsgemäßen Oberkiefer-Anlageelement erfindungsgemäß durch die Merkmale des Anspruchs 1 gelöst.

Das Oberkiefer-Anlageelement ist als eine zahnbogenförmige Oberkiefer-Bissgabel ausgebildet, welche zumindest an den offenen Endabschnitten Aufnahmebereiche aufweist, die zur reversiblen, arbeitsstabilen Aufnahme, insbesondere unter Zuhilfenahme von Abdruckmasse, von Oberkiefer-Zahnkronen konfiguriert sind, und welche im Bereich eines Bogenscheitelpunkts mit wenigstens einem Kieferrelationselement verbindbar ist.

Insbesondere sind zur Einstellung einer Kieferrelationsposition und/oder zur Erfassung von Kieferrelationsdaten mehrere Kieferrelationselemente vorgesehen. Diese sind entweder direkt mit der Oberkiefer-Bissgabel verbindbar, oder indirekt über andere Kieferrelationselemente mit der Oberkiefer-Bissgabel verbindbar.

Ein solches Oberkiefer-Anlageelement hat den Vorteil, dass es für alle vorstehend beschriebenen Verfahren zur Erfassung von Kieferrelationsdaten, bspw. Kieferrelationsbewegungen, Kieferrelationspositionen, insbesondere mittels eines Intraoralscanners, eignet und dabei einen sicheren, verkippungs- und verwacklungsfreien Sitz für Anwendungen im gesamten Kieferrelationsspektrum, d.h., die Registrierung aller möglichen Kieferrelationen, gewährleistet.

Gleichzeitig lässt das Oberkiefer-Anlageelement möglichst viele Zahnkronen und/oder Zahnfleisch und/oder Mundschleimhaut, die zusammengefasst auch als anatomische Strukturen des Oberkiefers bezeichnet werden können, zumindest soweit frei, dass ihre Positionen von einem Scanner erfasst werden können. Darüber hinaus ist das Oberkiefer-Anlageelement so konfiguriert, dass das Einsetzen desselben mit oder ohne daran angebundenen Kieferrelationselementen sowie das Einstellen der Kieferrelationselemente zur Erzeugung einer gewünschten Kieferrelationsposition bzw. das Einstellen der Kieferrelationsposition vom Patienten als angenehm empfunden wird.

Vorteilhafte Aus- und Weiterbildungen des Oberkiefer-Anlageelements sind in den abhängigen Ansprüchen beschrieben und werden nachfolgend erläutert.

Eine vorteilhafte Ausführungsform sieht vor, dass die Aufnahmebereiche einen Bereich der Frontzahnkronen und/oder Frontzahnkronenanteile und/oder Zahnfleisch und/oder zumindest teilweise das Vestibulum mit der das Vestibulum begrenzenden Mundschleimhaut aussparen. Zusätzlich oder alternativ können die Aufnahmebereiche distal von dem Bereich der Frontzahnkronen angeordnete Zahnkronen und/oder Zahnkronenanteile und/oder Zahnfleisch und/oder zumindest teilweise das Vestibulum aussparen. Das bedeutet, dass die Aussparungen auch, ausschließlich oder zusätzlich, an anderen bzw. weiteren Zahnkronen und/oder Zahnkronenanteilen und/oder Zahnfleischanteilen und/oder Vestibulumanteilen als den Frontzahnkronen vorgenommen werden und die Aussparungen soweit fortgeführt werden bis schließlich nur noch (Teil-) Zirkumferenzen aller oder eines Teils der Zahnkronen des Oberkiefer-Zahnbogens mit oder ohne angrenzendem Zahnfleisch und/oder Vestibulum umfasst werden. Grundsätzlich gilt für die Erfassung von Kieferrelationsdaten durch bspw. einen Scanner, insbesondere einen Intraoralscanner, je mehr Zahnkronen oder Zahnkronenanteile sichtbar sind, desto besser, da sich mit zunehmender Anzahl sichtbarer Zahnkronen oder zumindest Zahnkronenanteile die Erfassungsgenauigkeit verbessert.

Im Unterschied zu bekannten Paraokklusalbissgabeln, die dem Zahnbogen an seiner Außenseite der Zahnkronen und den Zwischenzahnkronenbereichen, als dem Interdentalbereich, an ihrer größten Zirkumferenz unter Klemmpassung anliegen, liegt das erfindungsgemäße Oberkiefer-Anlageelement, also die erfindungsgemäße Oberkiefer-Bissgabel, durch Abdruckmaterial vermittelt ganz oder zumindest teilweise den Zahnkronen und/oder dem Zahnfleisch und/oder zumindest Teilen des Vestibulums auf und/oder an und/oder nahe bei.

Insbesondere kann die erfindungsgemäße Oberkiefer-Bissgabel konfektioniert eingesetzt werden. Dadurch kann die Oberkiefer-Bissgabel bereits während des ersten Termins am Probanden vermittelt mit Abdruckmaterial am Oberkiefer fixiert werden, wohingegen die bekannten, individuellen, nicht konfektionierten, labortechnisch zu fertigenden Paraokklusalbissgabeln nach Abdrucknahme der Oberkieferzähne, bei einem ersten Termin des Probanden, labortechnisch hergestellt werden und können erst in einer zweiten Sitzung am Oberkiefer fixiert werden. Ferner können durch die Oberkiefer-Bissgabel die dreidimensionalen Oberflächen bekannt sein und müssen nicht bei jeder Anwendung erneut erhoben werden. Gegenüber bekannten Bissgabeln, die konfektioniert in den in der Zahnmedizin üblichen verschiedenen Zahnbogengrößen vorhanden sind, kann die erfindungsgemäße Oberkiefer-Bissgabel universell, unabhängig von der Oberkiefergröße eines Patienten eingesetzt werden. Das bedeutet, dass die erfindungsgemäße Oberkiefer-Bissgabel in nur einer Größe für alle Unterkiefergrößen universell verwendet werden kann und somit nicht in verschiedenen Größen vorrätig sein muss.

Die Aussparungen von Oberkiefer-Zahnkronen oder -Zahnkronenanteilen können dem Untersucher unter Orientierung an den von der Oberkiefer-Bissgabel und dem Abdruckmaterial freibleibenden Inzisalkanten bzw. Okklusalkanten und ggf. den hieran angrenzenden Zahnkronenenteilen die Positionierung des Unterkiefers, d.h., die Justierung des Unterkiefers, zum Oberkiefer in einer bestimmten Relation zueinander, erleichtern, was insbesondere für passive Verfahren von Vorteil ist. Darüber hinaus ermöglichen diese Aussparungen, insbesondere die eines Teils der seitlichen Zähne (Prämolaren und Molaren), die sogenannte Bisssperrung unter Sicht zu kontrollieren und diese entsprechend medizinischer Vorgänge einzustellen.

Bei der Registrierung der Kieferrelation, insbesondere mittels eines optischen oder Ultraschall-Scan, bspw. durch einen handelsüblichen optischen Intraoralscanner, kann aufgrund der Aussparungen die Positionierung der Oberkiefer-Bissgabel relativ zu den Oberkiefer-Zahnkronen anhand der freiliegenden Zahnkronenanteile über den optischen Scan erfolgen. Hierbei wird die scanoptische Erfassung durch die Aussparungen, insbesondere im Frontzahnbereich und dem hintersten Seitenzahnbereich (Molaren) dadurch erhöht, dass der Winkelbezug zwischen der Bissgabel einerseits und dem Zahnbogen andererseits, welche von Patient zu Patient verschieden sein kann, durch die maximal voneinander entfernten Messstellen präziser wird.

Ferner ist insbesondere das Aussparen der längsten Kronen im Zahnbogen, nämlich der Frontzahnkronen, die auch als Schneidezahnkronen bezeichnet werden, und ggf. auch der Eckzahnkronen von Vorteil, da somit der Biss, also das Zubeißen, geringer gesperrt wird, d.h., der Abstand zwischen den Oberkiefer-Zahnkronen und den Unterkiefer-Zahnkronen kann geringer sein als dies ohne Aussparung dieser Zähne der Fall ist. Dies ermöglicht eine Positionierung des Unterkiefers mit einem geringeren okklusalen Abstand von Oberkiefer- zu Unterkieferzähnen, was auch als Interokklusalabstand oder Bisssperrung bezeichnet werden kann, als dies bei der vollständigen Einfassung dieser Zahnkronen, wie es bspw. bei Abdrucklöffeln der Fall ist, möglich ist.

Dies basiert darauf, dass die Frontzähne und ggf. die Eckzähne mit Ihren Inzisalkanten grundsätzlich über die Okklusionsebene der übrigen Zähne hinausragen. Die geringere Bisssperrung ermöglicht die Verwendung des Oberkiefer-Anlageelements, also der Oberkiefer-Bissgabel, zur aktiven und passiven, statischen und dynamischen Kieferrelationsregistrierung bzw. zur Relationsregistrierung der Zahnkronen beider Kiefer zueinander zur Herstellung von Schienen und Aufbissbehelfe, die, eingesetzt im Mund des Probanden bzw. Patienten, eine größere oder gleiche Bisssperrung aufweisen als die eingesetzte Oberkiefer-Bissgabel. Dies rührt daher, dass Schienen und Aufbissbehelfe mindestens allen Zahnkronen eines Kiefers, bei Unterkieferprotrusionsschienen (UPS) auch mindestens allen Unterkiefer-Zahnkronen und zusätzlich teilweise allen Oberkiefer-Zahnkronen aufliegen, wobei die Bisssperrung größer oder gleich ist als die bei dem als die Oberkiefer-Bissgabel eingesetzten Oberkiefer-Anlageelement. Die Differenz bzw. Gleichheit dieser beiden Bisssperrungen ermöglicht es, ein Kieferrelationselement zwischen die beiden Inzisalkanten von Oberkiefer- und Unterkiefer-Schneidezähnen so zu positionieren, dass dieses auf den Inzisalkanten der Unterkiefer-Schneidezahnkronen aufliegen kann. Schienen, Aufbissbehelfe und/oder UPS werden nachfolgend als Hilfsmittel bezeichnet.

In einer beispielhaften Ausführungsform des Oberkiefer-Anlageelements können die Aufnahmebereiche einen Anteil aufweisen, der den Zahnkronen palatinal an und/oder nahe beiliegt oder beabstandet ist. Dieser den Zahnkronen palatinal angeordnete Anteil der Aufnahmebereiche stabilisiert die Lage des Oberkiefer-Anlageelements in der Querrichtung, also in einer links-rechts-Richtung und verhindert somit ein Verrutschen der Oberkiefer-Bissgabel aufgrund von quer zu den Seitenzähnen wirkenden Kräften bei der Einstellung der Kieferrelationsposition, bspw. durch eine seitliche Bewegung des Unterkiefers nach rechts oder links relativ zum Oberkiefer. Dadurch ist die Ausführung einer solchen seitlichen Bewegung des Unterkiefers unter sicherer Führung gestützt durch die Oberkiefer-Bissgabel möglich.

Mögliche Weiterbildungen des Oberkiefer-Anlageelements sehen vor, dass die Oberkiefer-Bissgabel zumindest im Bereich der Frontzahnkronen derart ausgebildet ist, dass das Zahnfleisch, zumindest teilweise das Vestibulum und zumindest teilweise die labialen Zahnkronenflächen verdeckt sind. Dadurch wird eine möglichst große Anlagefläche für die Oberkiefer-Bissgabel an dem Oberkiefer erzeugt, die unter Vermittlung mit Abdruckmasse eine ausreichend hohe Haftung bietet, um ein Verrutschen und/oder Verkippen der Oberkiefer-Bissgabel zu verhindern. Dabei bleibt die Inzisalkante der Frontzahnkronen weiterhin frei, sodass die Bisssperrung nicht vergrößert wird.

Die Oberkiefer-Bissgabel weist mindestens eine Öffnung, insbesondere mehrere Öffnungen, zum Befüllen eines Spalts bzw. Zwischenraums im Bereich der Frontzahnkronen und/oder eines Spalts bzw. Zwischenraums distal der Frontzahnkronen zwischen der Oberkiefer-Bissgabel und dem Oberkiefer auf. Durch die Öffnung bzw. die Öffnungen wird in möglichen Ausführungsformen nach der Ausrichtung bzw. Positionierung der Oberkiefer-Bissgabel am Oberkiefer-Zahnbogen Abdruckmasse in einen Zwischenraum, welcher zwischen den labialen Zahnkronenflächen und der den labialen Zahnkronenflächen zugewandten Seite der Oberkiefer-Bissgabel ausgebildet ist, eingefüllt, insbesondere bis dieser vollständig mit Abdruckmasse gefüllt ist.

Das nachträgliche Befüllen dieses Zwischenraums, d. h. nach Positionierung der Oberkiefer-Bissgabel im Mund am Oberkiefer vermittelt durch in den Aufnahmebereichen vorhandene Abdruckmasse zwischen der Oberkieferzahnreihe und der Unterkieferzahnreihe, erleichtert die korrekte Positionierung und Anhaftung der Oberkiefer-Bissgabel am Oberkiefer-Zahnbogen dadurch, dass zum einen kein Zeitdruck durch bereits aufgetragene Abdruckmasse, die beginnt auszuhärten, entsteht, und zum anderen, dass sich die Oberkiefer-Bissgabel einfach relativ nah zum Oberkiefer einsetzen, und im Mund am Oberkiefer im zugebissenen Zustand nicht mehr verschieben lässt, sodass das Abdruckmaterial nach Einfüllen genau in dieser eingestellten, korrekten Position der Oberkiefer-Bissgabel am Oberkiefer aushärten kann. Darüber hinaus ermöglicht das nachträgliche Befüllen des Zwischenraums, dass der Zwischenraum mit der optimalen Menge Abdruckmasse gefüllt wird, so dass die Abdruckmasse den Zwischenraum vollständig ausfüllt, auch in den Interdentalräumen, also den Räumen zwischen den Zähnen, und/oder sonstigen sonst schwer zugänglichen Hohlräumen, und dadurch die für die Größe des Zwischenraums größtmögliche Friktion erreicht wird.

Die Öffnungen zum Befüllen können rund, oval, schlitzförmig, sternförmig, dreieckig oder andersartig ausgebildet sein, und sind im bogenförmigen Bereich der Oberkiefer-Bissgabel, insbesondere im Bereich der Frontzahnkronen und/oder im Bereich der Eckzahnkronen und/oder im Bereich der Seitenzahnkronen, insbesondere im Bereich der Prämolaren ausgebildet. Eine besonders vorteilhafte Ausführungsform sieht vor, dass zwei Öffnungen im Bereich der Frontzahnkronen vorgesehen sind, die jeweils auf einer Seite eines im Bereich des vorderen Bogenscheitelpunkts anbringbaren Kieferrelationselements angeordnet sind.

In einer beispielhaften Ausführungsform sind die Oberkiefer-Bissgabel und das zumindest eine Kieferrelationselement integral ausgebildet. Eine integrale Ausbildung von dem zumindest einen, direkt mit die Oberkiefer-Bissgabel verbundenen Kieferrelationselement erhöht die Stabilität der Verbindung zwischen der Oberkiefer-Bissgabel. Eine reversible, also lösbare Verbindung zwischen der Oberkiefer-Bissgabel und dem zumindest einen Kieferrelationselement ermöglicht es, unterschiedliche Kieferrelationselemente, bspw. unterschiedlich große oder verschieden geformte Kieferrelationselemente, mit der Oberkiefer-Bissgabel zu verbinden und damit die Kieferrelationselemente z.B., individuell an den Patienten oder den Untersuchungszweck, wie bspw. Einstellen einer Kieferrelationsposition oder das Erfassen von Kieferrelationsdaten, anzupassen, ohne die Oberkiefer-Bissgabel tauschen zu müssen. Darüber hinaus ist es möglich, dieselben Kieferrelationselemente mit unterschiedlichen Oberkiefer-Bissgabeln, oder auch anderen Bissgabeln, wie bspw. Unterkiefer-Bissgabeln, zu verwenden. Eine solche reversible Verbindung kann bspw. mittels eines Formschlusses z.B., nach dem Stecker-Steckdose-Prinzip und einer Klemmpassung, einer Clips-Verbindung, einer Klemmverbindung mit Feststellschraube etc. umgesetzt sein.

Mögliche Weiterbildungen des Oberkiefer-Anlageelements sehen vor, dass das zumindest eine Kieferrelationselement eine Einrichtung zur Einstellung einer Kieferrelation, wie einer bestimmten Kieferrelationsposition, und/oder einer Kieferrelationsbewegung eines Patienten ist. Zusätzlich oder alternativ kann das zumindest eine Kieferrelationselement eine Einrichtung zur Erfassung einer Kieferrelation, wie einer bestimmten Kieferrelationsposition, und/oder einer Kieferrelationsbewegung eines Patienten sein. Die Einrichtung zur Einstellung einer Kieferrelation ist bspw. aus mehreren Kieferrelationselementen ausgebildet, die relativ verschieblich und/oder drehbar miteinander verbunden sind, um eine Kieferrelationsposition zu erwirken. Die Einrichtung zur Erfassung einer Kieferrelation ist bspw. eine Registriereinheit, wie eine optische Registriereinheit, z.B. ein Scanner oder ein Laser, oder eine auf Ultraschall oder Hochfrequenzen basierende Registriereinheit. Es ist auch möglich, dass eine Einrichtung zur Erfassung einer Kieferrelation mittels einer Einrichtung zur Einstellung einer Kieferrelationsposition an der Oberkiefer-Bissgabel angebracht ist.

In einer möglichen Ausführungsform des Oberkiefer-Anlageelements sind die offenen Endabschnitte der Oberkiefer-Bissgabel und die Aufnahmebereiche distal bündig zueinander ausgebildet. In einer alternativen Ausführungsform sind die offenen Endabschnitte der Oberkiefer-Bissgabel und die Aufnahmebereiche distal nicht bündig zueinander ausgebildet sind. Eine distal bündige Ausbildung der offenen Endabschnitte der Oberkiefer-Bissgabel und der Aufnahmebereiche bietet eine sehr gute Stabilität, da insbesondere die Seitenzahnkronen labial bzw. bukkal und palatinal gleichwertig von den Aufnahmebereichen umgeben sind und so eine sehr gleichmäßige Kraft- und/oder Druckverteilung durch seitlich wirkende Querkräfte möglich ist. Bei einer distal nicht bündigen Ausbildung der offenen Endabschnitte der Oberkiefer-Bissgabel und der Aufnahmebereiche stehen üblicherweise die Aufnahmebereiche distal über die offenen Endabschnitte hinaus vor bzw. über. Eine solche Ausbildung ermöglicht, dass Oberkiefer-Bissgabelanteile die labialen bzw. bukkalen Zahnkronenflächen und/oder Zahnfleisch und/oder Vestibulumflächen zumindest teilweise freilegen und diese so von der Einrichtung zur Erfassung von Kieferrelationsdaten erfasst werden können. Gleichzeitig werden die wirkenden Querkräfte durch palatinal angeordnete, sich distal weiter nach hinten erstreckenden Anteilen aufgenommen, und so ein Verrutschen der Oberkiefer-Bissgabel verhindert. Darüber hinaus kann die labial bzw. bukkal ausgebildete Verkürzung der Oberkiefer-Bissgabel von dem Patienten als sehr angenehm empfunden werden, da der zum Einsetzen einer Oberkiefer-Bissgabel verfügbare Raum, insbesondere labial des Oberkiefer-Zahnbogens, von dem Frontzahnbereich bis in den hinteren Seitenzahnbereich abnimmt. Durch die Verkürzung ragt die Oberkiefer-Bissgabel nicht mehr bis ganz nach hinten in die Mundhöhle hinein, wodurch insbesondere ein Würgereiz beim Patienten vermieden wird.

Zusätzlich oder alternativ kann in einer möglichen Ausführungsform des Oberkiefer-Anlageelements die Oberkiefer-Bissgabel im Bereich der Frontzahnkronen in cranialer-caudaler Richtung breiter sein als an den offenen Endabschnitten und sich entlang der cranial gelegenen Oberseite verjüngen. Eine solche Verjüngung insbesondere im oberen, also cranialen Bereich der Oberkiefer-Bissgabel berücksichtigt ebenfalls, dass nach dorsal der den Zahnkronen labiale Platz immer mehr abnimmt. Durch die Verjüngung ist die Oberkiefer-Bissgabel an diese "Platzknappheit" angepasst und wird von dem Patienten als besonders angenehm empfunden.

Eine mögliche Ausführungsform des Oberkiefer-Anlageelements sieht vor, dass die Oberkiefer-Bissgabel zumindest eine Aussparung zur Aufnahme des zumindest einen Kieferrelationselements aufweist. Das zumindest eine Kieferrelationselement kann bspw. mittels einer Klemmpassung in diese Aussparung eingesetzt werden. Alternativ kann das Kieferrelationselement darin auch mittels einer Feststellschraube in seiner Position festgelegt bzw. festgeklemmt werden. Alternativ, wie vorstehend bereits beschrieben ist auch eine integrale Ausbildung der Oberkiefer-Bissgabel und des zumindest einen Kieferrelationselements oder eine Clips-Verbindung denkbar.

Die Oberkiefer-Bissgabel besitzt auf der den Zahnkronen zugewandten Fläche mindestens einen Abstandshalter, insbesondere einen Interdentalstift, der zur Ausrichtung der Oberkiefer-Bissgabel ausgebildet ist, derart, dass zwischen den Frontzahnkronen des Oberkiefers und der Oberkiefer-Bissgabel zumindest der Zwischenraum ausgebildet ist. Der zumindest eine Abstandshalter ist vorzugsweise im Bereich des vorderen Bogenscheitelpunkts ausgebildet und wird zur Positionierung der Oberkiefer- Bissgabel relativ zum Oberkiefer an und/oder in dem Zahnzwischenraum der beiden mittleren Schneidezähne angeordnet. Der Abstandhalter dient dazu, die Oberkiefer-Bissgabel relativ zu den Oberkiefer-Zahnkronen auszurichten bzw. zu positionieren und gewährleistet gleichzeitig, dass zumindest zwischen den Frontzahnkronen und der Oberkiefer-Bissgabel ein Zwischenraum vorhanden ist, der zur Fixierung der Oberkiefer-Bissgabel an den Oberkiefer-Zahnkronen mit einer Abdruckmasse, bspw. aufweisend A-Silikone, gefüllt wird, wodurch eine ausreichend hohe Friktion zwischen den Oberkiefer-Zahnkronen und der Oberkiefer-Bissgabel, genauer gesagt, zwischen dem Oberkiefer mit seinen

Zahnkronen, Zahnfleisch und Vestibulum und der ausgehärteten Abdruckmasse sowie zwischen der ausgehärteten Abdruckmasse und der Oberkiefer-Bissgabel, erzielt wird, die ein Verkippen und/oder Verrutschen der Oberkiefer-Bissgabel relativ zu den Oberkiefer-Zahnkronen sicher verhindert. Es sind auch Ausführungen denkbar, bei denen der Abstandshalter dezentral, bspw. im Bereich eines Eckzahns angeordnet ist, oder mehrere Abstandshalter entlang des Bogens der Oberkiefer-Bissgabel angeordnet sind.

Mögliche Weiterbildungen des Oberkiefer-Anlageelements sehen vor, dass das zumindest eine Kieferrelationselement beidseitig bukkal, vorzugsweise an einem seitlichen Scheitelpunkt, an der Oberkiefer-Bissgabel angeordnet ist. Bukkal an der Oberkiefer-Bissgabel angeordnete Kieferrelationselemente sind insbesondere zur Erfassung der Kieferrelationsposition durch die Einrichtung, bspw. die Registriereinheit, wie ein Scanner vorteilhaft, und erstrecken sich von der Oberkiefer-Bissgabel bis zumindest nahe zu den Inzisal- und/oder Okklusalebenen der Unterkiefer-Zahnkronen, so dass sowohl das Kieferrelationselement als auch anatomische Strukturen des Unterkiefers erfasst werden können. Häufig können die Einrichtungen den Oberkiefer und den Unterkiefer nicht gemeinsam gleichzeitig erfassen. Daher werden der Oberkiefer und der Unterkiefer, entweder in einem kontinuierlichen Erfassungsvorgang nacheinander oder in zwei einzelnen Einfassungsvorgängen separat voneinander erfasst, wobei die bukkalen Kieferrelationselemente sowohl zusammen mit dem Oberkiefer als auch zusammen mit dem Unterkiefer durch die Einrichtung erfasst werden. Die Zuordnung der Oberkiefer-Position zur Unterkiefer-Position kann nun durch die Position der bukkalen Kieferrelationselemente in einem Überlagerungsvorgang durchgeführt werden und somit die Kieferrelationsposition korrekt ermittelt werden.

In einer beispielhaften Ausführungsform des Oberkiefer-Anlageelements kann die Oberkiefer-Bissgabel und/oder das zumindest eine Kieferrelationselement wenigstens eine Markierung aufweisen, die von einer Erfassungseinrichtung, insbesondere einem Intraoralscanner, erfassbar ist. Die Markierungen helfen, die registrierten bzw. erfassten Positionen des Oberkiefers und des Unterkiefers digital mittels eines Softwareprogramms einander so zuzuordnen, dass die Kieferrelationsposition durch das Softwareprogramm korrekt konstruiert werden kann.

Das erfindungsgemäße Oberkiefer-Anlagerungselement kann über das zumindest eine Kieferrelationselement mit einem extern ansteuerbaren Motor verbunden sein, der wiederum mit einem Unterkiefer-Anlagerungselement, wie eine Unterkiefer-Paraokklusionsbissgabel, ein Unterkiefer-Abdrucklöffel, oder eine Unterkiefer-Bissgabel, die analog zu der erfindungsgemäßen Oberkiefer-Bissgabel ausgebildet sein kann, entweder direkt oder über zumindest ein Verbindungselement, bspw. ein Kieferrelationselement, verbunden ist. Der extern ansteuerbare Motor dient zur (motorgetriebenen) Einstellung der Kieferrelationsposition und ist somit eine Einrichtung zur Einstellung der Kieferrelationsposition, welche motorgesteuert statt manuell eingestellt wird.

Die Erfindung wird nachfolgend anhand von Zeichnungen näher beschrieben. Die Zeichnungen sind lediglich beispielhaft zu verstehen. Sie sind schematisch, nicht maßstabsgetreu und zeigen jeweils nur die zum Verständnis der vorliegenden Erfindung wesentlichen Merkmale. Es versteht sich, dass weitere Merkmale, wie sie einem Fachmann geläufig sind, vorliegen können. In den Zeichnungen bezeichnen gleich Bezugsziffern jeweils gleich oder entsprechende Elemente. Es zeigen:
- Fig. 1: eine Draufsicht auf ein als eine Oberkiefer-Bissgabel ausgebildetes Oberkiefer-Anlageelement mit einem integral ausgebildeten Kieferrelationselement;
- Fig. 2: eine Explosionsdarstellung des erfindungsgemäßen Oberkiefer-Anlageelements in einer ersten beispielhaften Ausführungsform als Oberkiefer-Bissgabel mit separat ausgebildetem Kieferrelationselement und weiteren Kieferrelationselementen zur Einstellung einer Kieferrelation;
- Fig. 3: eine Seitenansicht eines menschlichen Schädels mit einem Unterkiefer in habitueller Unterkieferöffnungsposition und mit dem erfindungsgemäßen Oberkiefer-Anlageelement in der ersten Ausführungsform und den Kieferrelationselementen gemäß Fig. 2;
- Fig. 4: eine Explosionsdarstellung einer möglichen Ausführungsform des erfindungsgemäßen Oberkiefer-Anlageelements mit einer alternativ ausgebildeten Oberkiefer-Bissgabel und den Kieferrelationselementen zur Einstellung einer Kieferrelation gemäß Fig. 2;
- Fig. 5: eine Explosionsdarstellung einer beispielhaften Ausführungsform des erfindungsgemäßen Oberkiefer-Anlageelements mit einem separat ausgebildeten Kieferrelationselement;
- Fig. 6: das Oberkiefer-Anlageelement gemäß Fig. 5 zusätzlich mit einem bukkal angeordneten Kieferrelationselement;
- Fig. 7: eine Frontansicht eines menschlichen Schädels mit einem Unterkiefer in habitueller Unterkieferöffnungsposition und mit dem erfindungsgemäßen Oberkiefer-Anlageelement in einer möglichen Ausführungsform mit beidseitig daran angebrachten bukkalen Kieferrelationselementen sowie Öffnungen im Frontzahnbereich zum Einfüllen von Abdruckmasse;
- Fig. 8: eine perspektivische Darstellung einer beispielhaften Ausführungsform einer Einrichtung zur Einstellung einer Kieferrelation bei einem Patienten;
- Fig. 9: eine perspektivische Darstellung einer beispielhaften Ausführungsform einer Einrichtung zur Erfassung einer Kieferrelation bei einem Patienten;
- Fig. 10: eine Seitenansicht eines menschlichen Schädels mit einem Unterkiefer in habitueller Unterkieferöffnungsposition und mit dem erfindungsgemäßen Oberkiefer-Anlageelement, einem Unterkiefer-Anlageelement und einer anderen beispielhaften Ausführungsform einer Einrichtung zur Einstellung einer Kieferrelation; und
- Fig. 11: eine Darstellung eines Oberkiefer-Zahnbogens und eines Unterkiefer-Zahnbogens zur Veranschaulichung des Zahnschemas.

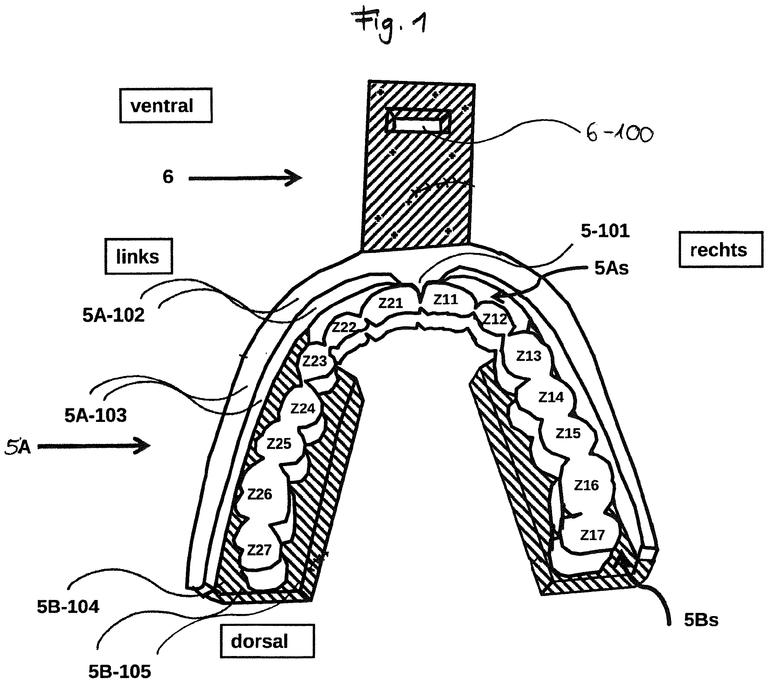

Fig. 1 zeigt eine Draufsicht auf ein erfindungsgemäßes Oberkiefer-Anlageelement, das als eine Oberkiefer-Bissgabel 5 ausgebildet ist. In der in Fig. 1 gezeigten ersten beispielhaften Ausführungsform ist die Oberkiefer-Bissgabel 5 mit einem ersten Kieferrelationselement 6 integral ausgebildet.

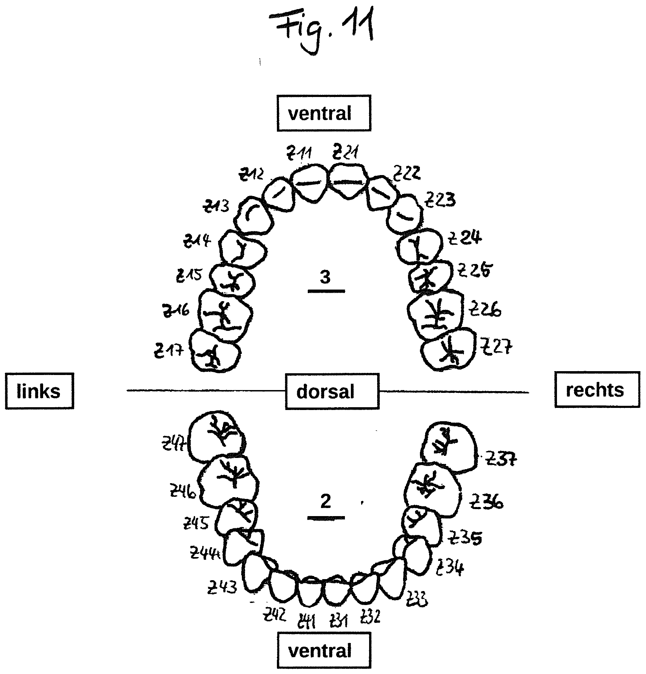

Die Oberkiefer-Bissgabel 5 gemäß Fig. 1 besitzt einen zahnbogenförmigen Abschnitt 5A, welcher einen vorderen Anteil 5A-102 und einem hinteren Anteil 5A-103 aufweist, und zwei Aufnahmebereiche 5B, die an dorsal gelegenen offenen Endabschnitten der Oberkiefer-Bissgabel 5 angeordnet sind. Die Aufnahmebereiche 5B haben einen im Wesentlichen L-förmigen Querschnitt, der einen ersten Anteil 5B-104, der den Zahnkronen (siehe Fig. 11) eines Oberkiefers 3 bukkal angeordnet ist, und einen zweiten Anteil 5B-105 aufweist, der den Zahnkronen des Oberkiefers 3 caudal angeordnet ist. Die Aufnahmebereiche 5B erstrecken sich in dieser ersten Ausführungsform im Wesentlichen im Bereich der Eckzähne Z23, Z13 und der Seitenzähne, also der Molaren und Prämolaren, Z24 bis Z27 bzw. Z14 bis Z17, und sparen einen Bereich 9 der Frontzähne Z12 bis Z22, die auch als Schneidezähne Z12 bis Z22 bezeichnet werden können, aus.

Im Bereich der Frontzähne Z12 bis Z22 verläuft die Oberkiefer-Bissgabel 5 mit ihrem vorderen Anteil 5A-102 durch einen Spalt 5As, der auch als Zwischenraum 5As bezeichnet wird, von den Zahnkronen Z12 bis Z22 getrennt und zwar labial dieser Zahnkronen und oberhalb, also cranial, ihrer Inzisalkanten im Oberkiefer 3. Die Breite des Zwischenraums 5As wird hierbei durch einen Abstandshalter 5-101 im Bereich der Zähne Z11 und Z21 des Oberkiefers 3 vorgegeben. Der Abstandshalter 5-101, welcher auch als ein Interdentalstift 5-101 bezeichnet werden kann, ist an der Innenseite, also der den Zahnkronen Z11, Z21 zugewandten Seite des vorderen Anteils 5A-102 als Fortsatz nach dorsal und mit seiner Spitze approximal bzw. ggf. interdental zwischen Z11 und Z21 ausgeprägt. Darüber hinaus dient er zur, vorzugsweise mittigen, Ausrichtung der Oberkiefer-Bissgabel 5 am Oberkiefer 3.

Der Interdentalstift 5-101 verhindert so das Kippen der Oberkiefer-Bissgabel 5 und definiert gleichzeitig die Breite des Zwischenraums 5As. Der vordere Anteil 5A-102 im Bereich der Frontzähne geht nach hinten, also dorsal, hin im Eck- und Seitenzahnbereich Z13 bis Z17 und Z23 bis Z27 im Oberkiefer 3 (mit seinem Spalt 5As) in den hinteren Anteil 5A-103 über und verläuft hier labial bzw. bukkal und durch einen Spalt bzw. Zwischenraum 5Bs beabstandet zu den Zahnkronenflächen. Der hintere Anteil 5A-103 geht in den sich nach unten, also caudal erstreckenden Aufnahmebereich-Anteil 5B-104 über, der wiederum in den horizontal verlaufenden Anteil 5B-105 übergeht, um den Okklusalflächen dieser Zähne an-, auf- oder nahe zu liegen. Die Breite und Länge der Oberkiefer-Bissgabel 5 ist so konfektioniert, dass sie für die Breiten und Längen des Zahnbogens jedes Probanden bzw. Patienten ohne oder nur mit geringen Anpassungen verwendbar ist und somit für alle international bekannten Normgrößen für Abdrucklöffel einsetzbar ist.

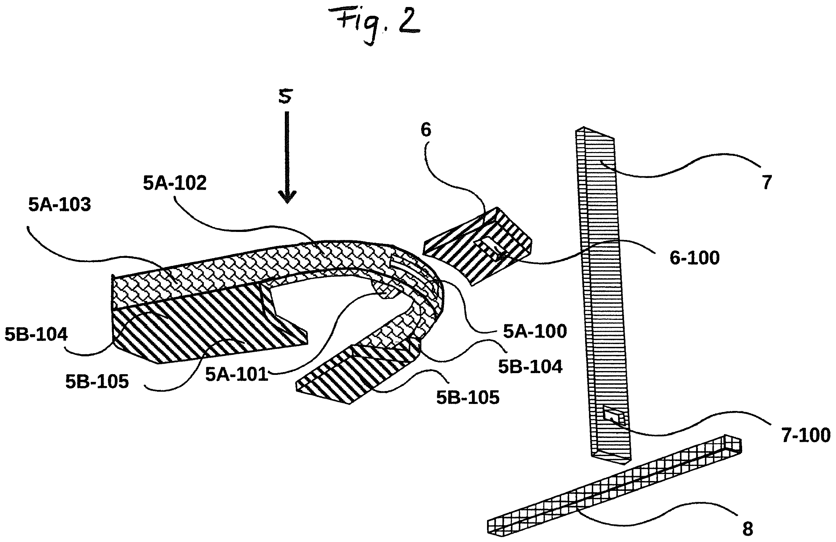

Im Bereich eines vorderen, zentralen Bogenscheitelpunkts der Oberkiefer-Bissgabel 5 ist ein erstes Kieferrelationselement 6 angeordnet, welches integral mit der Oberkiefer-Bissgabel 5 ausgebildet ist. In dem Kieferrelationselement 6 ist eine Aussparung 6-100 ausgebildet, die zur Aufnahme eines weiteren Kieferrelationselements (siehe Fig. 2, Fig. 8 oder Fig. 9) dient.

Der Oberkiefer-Bissgabelabschnitt 5A wird so weit in das Vestibulum, also die Mundhöhle, geführt, dass eine hinreichende Fixierung der Oberkiefer-Bissgabel 5 durch die mit Abdruckmaterial vermittelte Auflagerung, insbesondere im Bereich der Aufnahmebereiche 5B, auf den Zähnen oder den Zähnen und dem Zahnfleisch des Alveolarfortsatzes oder diesen und des Vestibulums entsteht.

Fig. 2 zeigt eine Explosionsdarstellung der Oberkiefer-Bissgabel 5 und dem ersten Kieferrelationselement 6, die im Wesentlichen mit der ersten Ausführungsform gemäß Fig.1 übereinstimmen, wobei das erste Kieferrelationselement 6 separat von der Oberkiefer-Bissgabel 5 ausgebildet ist. Ferner sind in Fig. 2 weitere Kieferrelationselemente 7, 8 gezeigt, die zusammen eine Einrichtung zur Einstellung einer Kieferrelation bei deinem Patienten ausbilden.

Das erste Kieferrelationselement 6 ist durch eine formschlüssige Klemmpassung in einer in der Oberkiefer-Bissgabel 5 ausgebildeten Aussparung 5A-100 reversibel fixierbar. Dies ermöglicht es, eine individuell an den Patienten angepasste Oberkiefer-Bissgabel 5 mit einem standardisierten Kieferrelationselement 6 zu verwenden. Ein zweites Kieferrelationselement 7 mittels der Aussparung 6-100 und mit dem Kieferrelationselement 6, und ein drittes Kieferrelationselement 8 mittels einer Aussparung 7-100 mit dem zweiten Kieferrelationselement 7 verbunden. Die Aussparungen 6-100, 7-100 und die Kieferrelationselemente 7, 8 sind dabei so ausgebildet, dass eine ausreichend feste Verbindung zwischen den Elementen 6, 7, 8 ausgebildet ist, und dennoch eine Verschiebung im Sinne einer Justierung zueinander für die Ausrichtung auf die jeweilige Kieferrelation möglich ist. Anstelle von solchen formschlüssigen Klemmpassungen können auch geführte Passungen mit Feststellschrauben (nicht gezeigt) und anstelle der Verschiebung eine Zahnradführung über Rändel (letzteres nicht abgebildet) eingesetzt werden, sofern sie die Anforderungen an eine Justierung erfüllen. Es ist ferner denkbar, die Kieferrelationselemente 6, 7, 8 und die zugehörigen Aussparungen 6-100, 7-100 zylindrisch, also mit einem runden Querschnitt auszuführen, um sie zusätzlich zu der relativen axialen Verschiebung auch relativ zueinander verdrehen zu können. Ferner ist es denkbar, die Kieferrelationselemente 6, 7, 8, mittels Gelenkverbindungen miteinander zu verbinden, bzw. Gelenkverbindungen innerhalb der Kieferrelationselemente 6, 7, 8 vorzusehen, um weitere Bewegungs- und Einstellmöglichkeiten realisieren zu können.

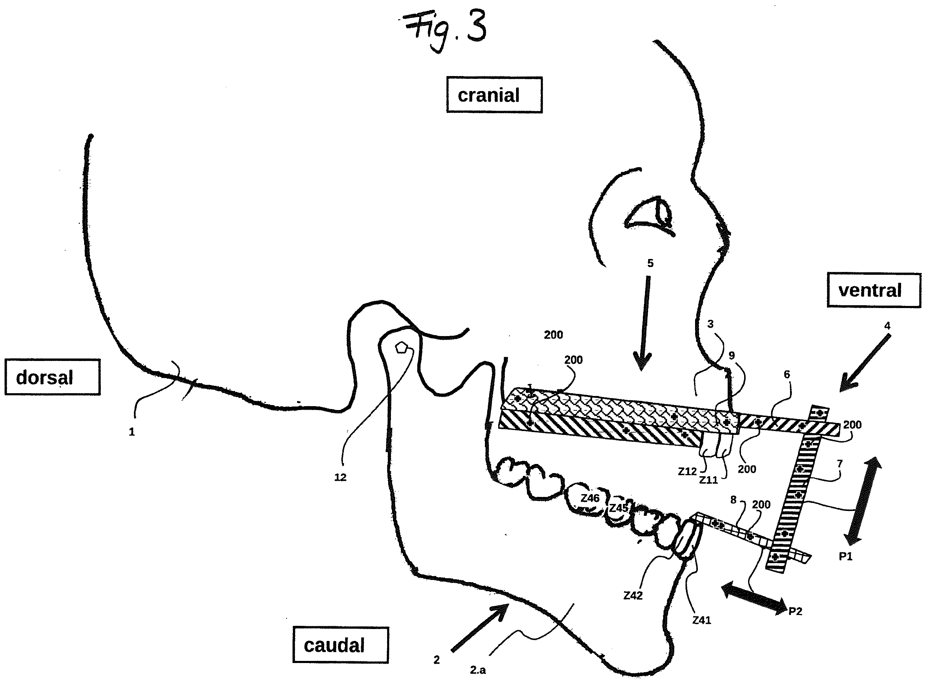

Fig. 3 zeigt die in Fig. 2 dargestellte erste Ausführungsform des Oberkiefer-Anlageelements mit den Kieferrelationselementen 6, 7, 8 zur Einstellung einer Kieferrelation in einer Seitenansicht in einem in den Mund eines Patienten eingesetzten Zustand. Fig. 3 zeigt schematisch einen menschlichen Schädel 1 in einer Seitenansicht, mit einem Unterkiefer 2 in einer relativ zu dem Oberkiefer 3 vorbestimmten habituellen Unterkieferöffnungsposition 2.a. An dem Oberkiefer 3 ist das Oberkiefer-Anlageelement als die Oberkiefer-Bissgabel 5 in der ersten Ausführungsform gemäß Fig. 2, angeordnet. Die Oberkiefer-Bissgabel 5 weist das nach vorne hin ausgeprägte, also sich nach ventral erstreckende, erste Kieferrelationselement 6 als separat von der Oberkiefer-Bissgabel 5 ausgebildetes Kieferrelationselement, das von dem ersten Kieferrelationselement 6 aus nach unten ausgeprägtes, also sich nach caudal erstreckende, zweite Kieferrelationselement 7 und das von dem zweiten Kieferrelationselement 7 nach hinten ausgeprägte, also sich nach dorsal erstreckende, dritte Kieferrelationselement 8 auf. Die von der Oberkiefer-Bissgabel 5 separat ausgebildeten Kieferrelationselemente 6, 7, 8 können zusammengefasst auch als Vorrichtung 4 bezeichnet werden, die eine Einrichtung zur Einstellung einer Kieferrelationsposition darstellt.

Die Vorrichtung 4 bietet zusammen mit der Oberkiefer-Bissgabel 5 eine statische Unterkieferöffnungsposition in der beispielhaft gewählten habituellen Unterkieferöffnungsposition 2.a, d.h., eine Abstützung des Unterkiefers 2 gegenüber dem Oberkiefer 3 (passives Verfahren) als Hilfe für den menschlichen Probanden für das Halten dieser Unterkieferöffnungsposition 2.a. Dies ist dadurch möglich, dass die einzelnen Elemente der von der Oberkiefer-Bissgabel 5 nach vorne hin ausgeprägten Vorrichtung 4 zueinander beweglich verstellbar und arretierbar sind. In der hier gezeigten beispielhaften Ausführungsform ist beispielhaft das zweite Kieferrelationselement 7 in seiner Erstreckungsrichtung verschieblich mit dem ersten Kieferrelationselement 6 verbunden (siehe Pfeil P1) und quer zu dem ersten Kieferrelationselement 6 angeordnet, und das dritte Kieferrelationselement 8 ist in seiner Erstreckungsrichtung verschieblich mit dem zweiten Kieferrelationselement 7 verbunden (siehe Pfeil P2) und quer zu dem zweiten Kieferrelationselement 7 angeordnet. Ferner liegt das dritte Kieferrelationselement 8 auf der Inzisalkante, also der Schneidekante, eines oder mehrerer der ersten unteren Schneidezähne Z32 bis Z42 (siehe Fig. 11) auf.

Durch die Aussparung des Bereichs 9 der oberen Schneidezähne Z12 bis Z21, oder im Bereich der oberen Schneide- und Eckzähne Z13 bis Z23, kann eine durch die Oberkiefer-Bissgabel 5 bedingte Bisssperrung, wie eingangs beschrieben, reduziert werden. Würden die Zähne Z12 bis Z21 bzw. Z13 bis Z23, die am längsten ausgeprägt sind, von der Oberkiefer-Bissgabel 5 mit eingefasst werden, so würde eine größere Bisssperrung auftreten und die Variationen der einstellbaren Kieferrelationen mit der Vorrichtung reduzieren.

Daher eignet sich die Vorrichtung 4 unter anderem besonders zur Verwendung bei der Registrierung einer bestimmten aktiven Unterkieferprotrusion zur Herstellung von Unterkieferprotrusionsschienen (UPS) zur Behandlung des Schnarchens oder nächtlicher obstruktiver Atmungsstörungen. Bei den UPS handelt es sich um Schienensysteme, die den Ober- und Unterkieferzahnkronen anliegen und hierdurch auch bei Aussparung der Frontzahnkronen bzw. der Front- und Eckzahnkronen eine gleich oder größere Bisssperrung auslösen als diese bei der eingesetzten Vorrichtung 4 mit der Oberkiefer-Bissgabel 5 der Fall wäre. Die Vorrichtung 4 in Kombination mit der Oberkiefer-Bissgabel 5 kann nachfolgend auch als Einrichtung 45 bezeichnet werden. Diese Bisssperrungsdifferenz, die sich bei einer eingesetzten UPS im Vergleich zur eingesetzten Einrichtung 5 ergibt, lässt mindestens einen derartigen Spalt zwischen den Oberkiefer- und Unterkieferinzisalkanten für die Vorrichtung 4 frei, durch den das dritte Kieferrelationselement 8 auf den Inzisalkanten der Unterkieferschneidzähne Z32 bis Z42 aufliegen und den Unterkiefer 2 positionieren kann.

Darüber hinaus eignet sich die Vorrichtung 4 unter anderem besonders zur Verwendung für die Herstellung von Schienen, die dem Ober- oder Unterkiefer in allen Kronenbereichen, also auch allen Frontzahnkronen des entsprechenden Kiefers, aufliegen. Solche Schienen finden beispielsweise in der Therapie der Kiefergelenke, der Kiefermuskulatur, der Zahnfehlstellungen und von Kieferbrüchen Anwendung.

An den Oberflächen der Oberkiefer-Bissgabel 5 und der Vorrichtung 4 angebrachte Markierungen 200, bspw. optische Marker, (als Kreuze dargestellt) dienen dabei der Präzisierung für Scanverfahren, bspw. mittels optischer Introralscanner, und/oder als ein als Sender/Empfängersystem 200 ausgebildetes elektronisches Messsystem zur messtechnischen Bestimmung der Kieferrelation, die später noch Betrachtung finden.

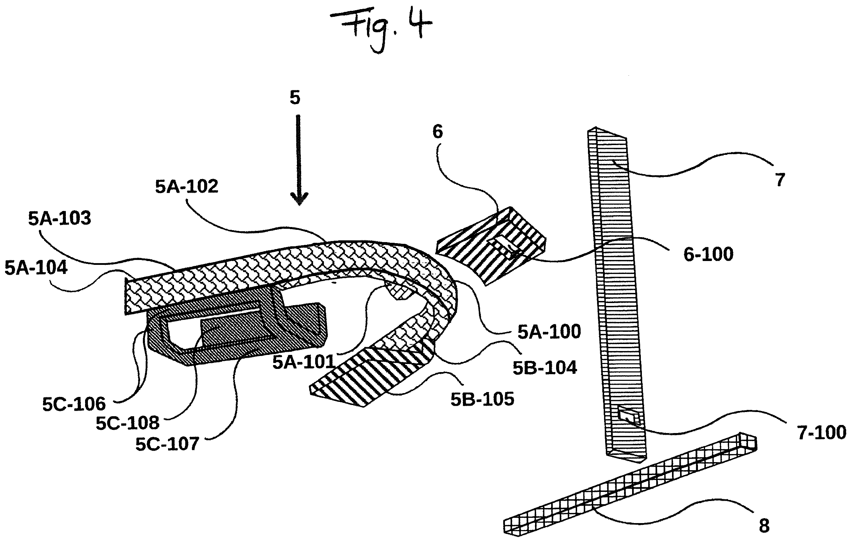

Fig. 4 zeigt eine weitere mögliche Ausprägungsform der Aufnahmebereiche 5B, welche sich im Wesentlichen aus einer Änderung der Anteile 5B-104 und 5B-105 aus Fig. 2 zusammensetzt und weitere Aussparungen im Zahnkronenbereich aufweist, sowie um einen palatinal den Zahnkronen angeordneten Anteil ergänzt ist.

Das in Fig. 4 gezeigte Oberkiefer-Anlageelement entspricht im Wesentlichen der in Fig. 2 gezeigten Ausführungsform und unterscheidet sich von Fig. 2 lediglich darin, dass der (aus Patientensicht) rechte Aufnahmebereich in einer zweiten Ausführungsform ausgeführt ist. Zur Verdeutlichung der Unterschiede ist der (aus Patientensicht linke) Aufnahmebereich gemäß der ersten Ausführungsform (siehe Fig. 2) dargestellt. In der praktischen Anwendung sind die Aufnahmebereiche an der Oberkiefer-Bissgabel 5 vorzugsweise auf beiden Seiten gemäß derselben Ausführungsform ausgebildet.

Die Anteile 5B-104 und 5B-105 des Aufnahmebereichs 5B gemäß der ersten beispielhaften Ausführungsform weisen gemäß der zweiten Ausführungsform bukkal eine fensterartige Aussparung auf und werden mit den Bezugszeichen 5C-106 und 5C-107 gekennzeichnet. Ferner ist der horizontale Anteil 5C-107 gemäß der zweiten Ausführungsform zur Erhöhung der Retention entlang der palatinalen Kronenseite der Zahnkronen durch einen Anteil 5C-108 fortgesetzt. Ferner ist der Aufnahmebereich 5C gemäß der zweiten Ausführungsform verglichen mit dem Aufnahmebereich 5B gemäß der ersten Ausführungsform distal verkürzt und erstreckt sich nicht bis zum Ende der Zahnreihe Z17, Z27. Der zahnbogenförmige Anteil 5A der Oberkiefer-Bissgabel 5 ist gegenüber der ersten Ausführungsform unverändert, so dass der Anteil 5A distal mit einem Anteil 5A-104 über das distale Ende der Aufnahmebereiche 5C gemäß der zweiten Ausführungsform vorsteht. Ein Anteil der seitlichen und caudalen Flächen der Zahnkronen liegt durch die Aussparung in Bereichen der Anteile 5C-106 und 5C-107 teilweise frei und ermöglicht so zusätzlich zu dem Scannen der ausgesparten Zahnkronenanteile der Front- bzw. der Front- und Eckzähne auch das Scannen dieser seitlichen und hinteren ausgesparten Zahnkronenanteile bei eingesetzter Oberkiefer-Bissgabel 5. Das bedeutet, dass der Anteil 5C-107 der zweiten Ausführungsform gegenüber dem Anteil 5B-105 der ersten Ausführungsform in bukkaler Richtung im Bereich der Aussparung schmaler ausgeführt ist. Dadurch wird der Überlagerungsvorgang unterschiedlicher Scans erhöht. Dadurch verbessert sich auch die Genauigkeit des Scans.

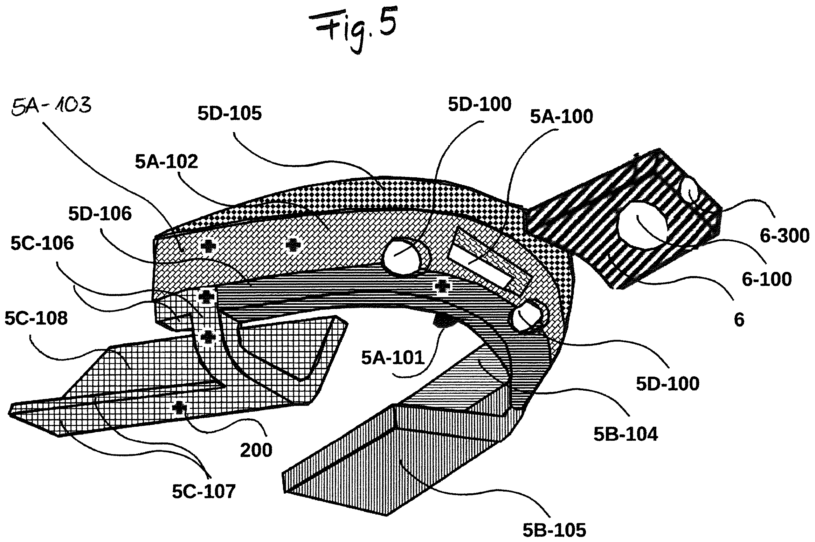

Fig. 5 zeigt eine dritte beispielhafte Ausführungsform des als Oberkiefer-Bissgabel 5 ausgebildeten Oberkiefer-Anlageelements. Im Vergleich zu den ersten und zweiten Ausführungsformen gemäß der Fig. 1 bis 4, ist der zahnbogenförmige Abschnitt 5A Oberkiefer-Bissgabel 5 dadurch verkürzt, dass der hintere Anteil 5A-103 distale deutlich verkürzt ist. Der vordere Anteil 5A-102 ist verglichen mit den vorherigen Ausführungsformen sowohl cranial als auch caudal erweitert. Zur Verdeutlichung des Unterschieds zu den vorherigen Ausführungsformen der Oberkiefer-Bissgabel 5 ist eine craniale Erweiterung 5D-105 und eine caudale Erweiterung 5D-106 gegenüber dem vorderen Anteil 5A-103 der Oberkiefer-Bissgabel 5 abgesetzt dargestellt. In der Praxis wird die Oberkiefer-Bissgabel aufweisend den Anteil 5A-102, und die Erweiterungen 5D-105 sowie 5D-106 einteilig, also integral, ausgebildet. In der hier gezeigten Ausführungsform verjüngt sich die craniale Erweiterung 5D-105 zusätzlich noch nach dorsal, also nach hinten, in Richtung zu den offenen Endabschnitten der Oberkiefer-Bissgabel 5. Auch ist es denkbar, dass sich die caudale Erweiterung 5D-106 in Richtung zu den Aufnahmebereichen hin nach caudal verbreitert, und insbesondere bündig mit dem Anteil 5C-106 in den Anteil 5C-107 des Aufnahmebereichs übergeht.

Im Bereich 9 der Frontzahnkronen sind beidseits der Aussparung 5A-100 zur Aufnahme des ersten Kieferrelationselements 6 Öffnungen 5D-100 ausgebildet. Die Öffnungen 5D-100 dienen zum Befüllen des Zwischenraums 5As zwischen den labialen Zahnkronenflächen der Schneide- Z12 bis Z22 und ggf. weiterer Zähne wie der Eckzähne Z13, Z23, dem daran angrenzenden Zahnfleisch und ggf. zumindest Anteilen des Vestibulums und der Oberkiefer-Bissgabel 5 mit Abdruckmasse, nachdem die Oberkiefer-Bissgabel 5 an dem Oberkiefer 3 ausgerichtet und positioniert wurde.

Zur Ausrichtung bzw. Positionierung der Oberkiefer-Bissgabel 5 an dem Oberkiefer 3 wird zunächst Abdruckmasse auf die den Zahnkronen zugewandten Flächen der Anteile 5C-107 bzw. 5C-108 der Aufnahmebereiche aufgetragen und die Oberkiefer-Bissgabel 5 dann vermittelt mit der Abdruckmasse an den Zähnen im Bereich der Aufnahmebereiche "grob" festgelegt. Anschließend ist es von Vorteil, wenn der Patient zubeißt, so dass die Oberkiefer-Bissgabel 5 sicher zwischen der Oberkiefer- und der Unterkieferzahnreihe "eingeklemmt" und so in ihrer Position fixiert ist, während die Abdruckmasse aushärtet. Nachdem die Abdruckmasse ausgehärtet ist, wird der Spalt 5As und wahlweise auch der Spalt 5Bs und/oder andere angrenzende Spalte über die Öffnungen 5D-100 von Außen mit Abdruckmasse ausgefüllt. Nach Aushärtung auch dieser Abdruckmasse ist die Oberkiefer-Bissgabel 5 ausreichend stabil an den Oberkiefer-Zahnkronen und des Oberkiefer-Alveolarfortsatzes festgelegt, so dass ungewolltes Verkippen und/oder Verrutschen und/oder Abziehen zuverlässig verhindert wird.

Insbesondere zum Befüllen des Spalts 5Bs und ggf. weiterer angrenzender Spalte von Außen mit Abdruckmasse können die Öffnungen 5D-100 auch näher zu den offenen Endabschnitten hin in der Oberkiefer-Bissgabel 5 ausgebildet sein, oder es können zusätzlich zu den Öffnungen 5D-100 wie in Fig. 5 dargestellt, weitere Öffnungen 5D-100 im Seitenzahnbereich der Oberkiefer-Bissgabel 5 vorgesehen werden.

Die craniale und die caudale Erweiterung 5D-105, 5D-106 insbesondere des Anteils 5A-102 der Oberkiefer-Bissgabel 5 vergrößert die Anlagefläche der Oberkiefer-Bissgabel 5 gemäß der vorherigen Ausführungsformen derart, dass die Oberkiefer-Bissgabel 5 vermittelt durch die von außen in den Zwischenraum 5As eingefüllte Abdruckmasse nicht nur an den Oberkiefer-Zahnkronen und Teilen des angrenzenden Zahnfleischs anhaftet, sondern sich über das Zahnfleisch hinaus bis an den Alveolarfortsatz im Vestibulum erstreckt. Ferner ist es durch das nachträgliche Einbringen der Abdruckmasse, vorzugsweise unter Druck, in den Zwischenraum 5As durch Befüllen von außen möglich, dass sich die Abdruckmasse auch bis in Zahnzwischenräume und sonstige schwer zugängliche Hohlräume des Vestibulums hinein kommt.

Durch die distale Verkürzung der Oberkiefer-Bissgabel 5 erstreckt sich diese verglichen mit den vorherigen Ausführungsformen weniger weit nach dorsal, also nach hinten und erstreckt sich zumindest nicht mehr bis über die Molaren hinaus, sondern endet im Bereich der Prämolaren oder im Bereich der Eckzähne. Durch die Erweiterungen 5D-105, 5D-106 im Frontzahnbereich und dem beschriebenen Befüllen des Zwischenraums 5As ist die Oberkiefer-Bissgabel 5 trotz der Verkürzung ausreichend stabil festgelegt, um an die Oberkiefer-Bissgabel 5 angebundene Kieferrelationselemente 6, 7, 8 zur Einstellung einer Kieferrelation bewegen zu können, ohne dass die Oberkiefer-Bissgabel 5 an den Zahnkronen des Oberkiefers 3 verrutscht oder verkippt.

Durch die Verkürzung der Oberkiefer-Bissgabel 5 (um den hinteren Anteil 5A-103) sowie durch die optionale Verjüngung der cranialen Erweiterung 5D-105 verbessert sich der Tragekomfort für den Patienten, da der verfügbare Platz im distalen Oberkieferbereich von ventral nach dorsal immer mehr abnimmt und die so ausgebildete Oberkiefer-Bissgabel 5 diesen nicht vollständig ausfüllt. Dadurch wird beim Patienten insbesondere ein Würgereiz vermieden.

Zusätzlich unterscheidet sich die in Fig. 5 gezeigte Ausführungsform der Oberkiefer-Bissgabel 5 in der Ausgestaltung der Aufnahmebereiche. Wie auch schon in Fig. 4 ist zur Verdeutlichung der Unterschiede gegenüber der Aufnahmebereiche 5B der ersten Ausführungsform der (aus Patientensicht gesehen) linke Aufnahmebereich in Fig. 5 gemäß der ersten Ausführungsform (siehe Fig. 2) ausgebildet. Der (aus Patientensicht gesehen), rechte Aufnahmebereich in Fig. 5 ist gemäß einer dritten Ausführungsform ausgebildet. Wie bereits im Zusammenhang mit Fig. 4 erläutert, weist die Oberkiefer-Bissgabel 5 in der Praxis beidseitig, vorzugsweise gleich ausgebildete Aufnahmebereiche auf.

Der Aufnahmebereich gemäß der dritten Ausführungsform entspricht im Wesentlichen dem Aufnahmebereich gemäß der zweiten Ausführungsform (siehe Fig. 4). Der Aufnahmebereich der dritten Ausführungsform unterscheidet sich von dem gemäß der zweiten Ausführungsform darin, dass der Anteil 5C-106 distal verkürzt ist und nur noch einen stiftartigen Befestigungsabschnitt ausbildet, der mit dem Anteil 5A-103 und/oder der Erweiterung 5D-106 der Oberkiefer-Bissgabel 5 verbunden ist. Aufgrund der distalen Verkürzung des Anteils 5C-106, entfällt in der dritten Ausführungsform der distale Verbindungsabschnitt zwischen dem Anteil 5C-106 und 5C-107 gemäß der zweiten Ausführungsform, also quasi der distal angeordnete befestigungsstiftartige Anteil 5C-106 in Fig. 4, so dass der Anteil 5C-107 der dritten Ausführungsform distal auf die Breite im Bereich der Aussparung gemäß der zweiten Ausführungsform verschmälert endet.

Somit bleiben nicht nur in den Aussparungen von 5C-106 und 5C-107 Teile, wie in Fig. 4 gezeigt, der Okklusal- und Bukkalflächen von Zahnkronenanteilen frei, sondern durch eine distale, nach dorsal offene Aussparung, wie in Fig. 5 gezeigt, sind weitere okklusale und bukkale Zahnkronenanteile freigelegt und dadurch für eine Erfassungeinrichtung erfassbar.

Somit besitzt der Aufnahmebereich in der dritten Ausführungsform einen im Wesentlichen L-förmigen Querschnitt, der mit dem horizontalen Anteil 5C-107 und dem vertikalen Anteil 5C-108 gebildet ist, die sich in der ventral-dorsal Richtung entlang der Zahnreihe erstrecken. Der horizontale Anteil 5C-107 ist zu den Okklusalflächen der Oberkiefer-Zahnkronen caudal angelegt und/oder beabstandet angeordnet und der vertikale Anteil 5C-108 erstreckt sich von dem horizontalen Anteil 5C-107 nach cranial und palatinal angelegt und/oder beabstandet zu den Zahnkronen. Der Aufnahmebereich gemäß der dritten Ausführungsform ist, wie bereits beschrieben, über den Befestigungsabschnitt 5C-106 mit dem zahnbogenförmigen Anteil 5A der Oberkiefer-Bissgabel 5 verbunden.

Der Befestigungsabschnitt 5C-106 ist stiftartig nach cranial an dem distal stark verkürzten Element 5A-103 der Bissgabel 5 ausgebildet, sodass ein Großteil des sich nach dorsal erstreckenden Aufnahmebereichs im Vergleich zu der ersten und insbesondere zu der zweiten Ausführungsform keine weiteren Kontakt- bzw. Befestigungspunkte an dem Anteil 5A der Oberkiefer-Bissgabel 5 aufweist. Durch die L-förmige Konfiguration der Aufnahmebereichen 5C-107 und 5C-108 wird der Sitz des Oberkieferanlagerungselements gegen Horizontalbewegungen gesichert. Ferner ist es denkbar, den Befestigungsabschnitt 5C-106 gegen mechanische Belastung zusätzlich dadurch zu stabilisieren, dass der Anteil 5D-106 in seinem distalen Bereich soweit nach caudal erweitert wird, dass er Kontakt zu dem Anteil 5C-107 erhält und somit die Verbindung der Aufnahmebereiche mit dem Oberkiefer-Bissgabelanteil 5A bzgl. Stabilität und/oder Steifigkeit und/oder Festigkeit verbessert.

Die dritte Ausführungsform ist damit im Vergleich zur ersten, aber auch zur zweiten, in den distalen Aufnahmebereichen stark reduziert und in den ventralen Aufnahmebereichen stark erweitert worden. Dies führt in den distalen Aufnahmebereichen zu mehr freiliegenden Zahnkronen-, Zahnfleisch- und Vestibulumbereichen, was die analoge und digitale Registrierung erleichtert und den Tragekomfort für den Patienten erhöht. In den ventralen Bereichen führt dies zu einer verbesserten Retention des Oberkiefer-Anlageelement an den Zähnen und des Alveolarfortsatzes und des Vestibulums und somit am Oberkiefer 3.

Darüber hinaus zeigt Fig. 5 eine weitere mögliche Ausführungsform des ersten Kieferrelationselements 6. Das Kieferrelationselement 6 gemäß dieser Ausführungsform weist eine rund ausgeführte Aussparung 6-100 zur Aufnahme eines weiteren Kieferrelationselements 7 auf. Hierdurch kann das zweite Kieferrelationselement 7, welches gegengleich ein zylindrisch ausgeführtes Verbindungselement besitzt, gegenüber dem ersten Kieferrelationselement 6 verdreht eingestellt werden und erweitert somit die Einstellmöglichkeiten zur Einstellung einer Kieferrelationsposition durch die Kieferrelationselemente. Zusätzlich weist das erste Kieferrelationselement 6 eine Durchgangsöffnung 6-300 auf, die in einem Winkel zur Aussparung 6-100 angeordnet ist und bis in diese hineinragt. Die Durchgangsöffnung 6-300 besitzt vorzugsweise ein Gewinde und dient zur Aufnahme eines Feststellbolzens oder einer Feststellschraube, mittels derer das Kieferrelationselement 7 in der Aussparung 6-100 festgelegt bzw. fixiert wird.

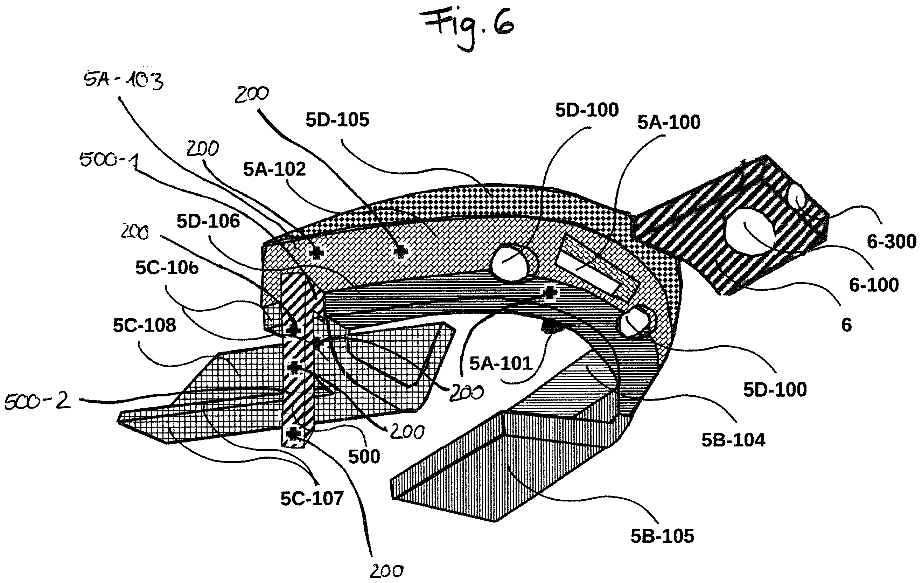

Fig. 6 entspricht überwiegend der in Fig. 5 gezeigten Ausführungsform des Oberkiefer-Anlageelements, wobei in Fig. 6 zusätzlich ein Kieferrelationselement 500 angeordnet ist. Dieses weist einen im Wesentlichen horizontalen Anteil 500-1 und einen im Wesentlichen vertikalen Anteil 500-2 auf, wobei der Anteil 500-1 den Anteil 500-2 in labialer Richtung vom der Oberkiefer-Bissgabel 5 beabstandet.

Das Kieferrelationselement 500 weist mehrere Markierungen 200 auf, die von einem Scanner erfassbar ist. Im Bereich des Anteils 5A sind ebenfalls solche Markierungen 200 angeordnet. Zur Erfassung eines Kieferrelationselements 500 durch eine Erfassungseinrichtung, insbesondere durch einen Scanner, reicht ein auf dem Kieferrelationselement 500 angeordnete bzw. ausgebildete Markierung 200 aus. Mehrere Markierungen 200 können den Genauigkeit des Scans erhöhen.

Das Kieferrelationselement 500 dient als Hilfsmittel zur Erfassung der Unterkiefer-Zähne in Relation zu den Oberkiefer-Zähnen, wenn mit der Erfassungseinrichtung, bspw. einem Scanner, entlang der freiliegenden Oberkiefer-Zahnanteile entlang der Oberkiefer-Bissgabel 5 über das Kieferrelationselement 500 die Unterkieferzähne erfasst werden.

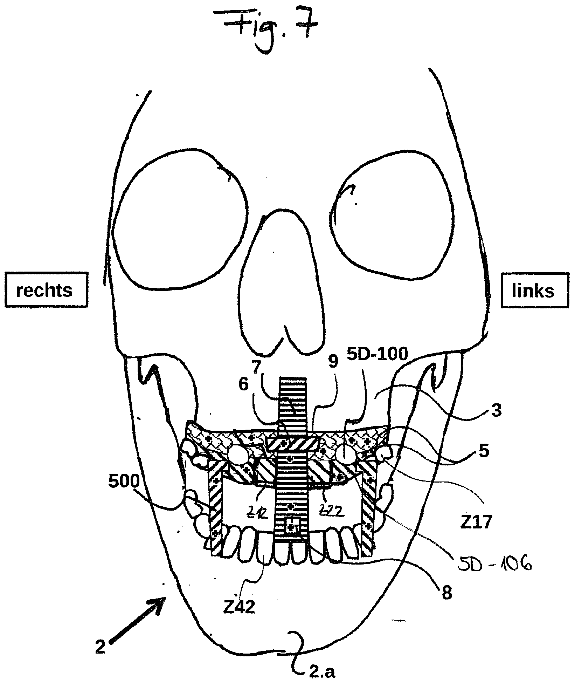

Wie in Fig. 7 zu erkennen ist, liegen die Kieferrelationselemente 500 im eingesetzten Zustand der Oberkiefer-Bissgabel 5 an den Unterkiefer-Zähnen an und/oder auf und/oder nahe bei und oder sind zu diesen beabstandet, sodass sich die Unterkiefer-Zähne relativ zu den Kieferrelationselementen 500 frei in alle Richtungen bewegen können. Die Position der Oberkiefer-Bissgabel 5 zusammen mit den Oberkiefer-Zähnen und den Unterkiefer-Zähnen ist mit zunehmender Mundöffnung aufgrund des begrenzten Erfassungsbereichs der Erfassungseinheit, insbesondere mit einem Intraoralscanner, nicht gemeinsam in einem Scan erfassbar. Somit werden zunächst die Oberkiefer-Bissgabel 5 und die Oberkiefer-Zähne zusammen mit dem Kieferrelationselement 500 scantechnisch erfasst. In einem zweiten Scandurchlauf werden die Unterkiefer-Zähne zusammen mit dem Kieferrelationselement 500 erfasst. In einem dritten Schritt werden diese beiden Scans überlagert, sodass die korrekte Kieferrelationsposition mittels der Kieferrelationselemente 500 ermittelt werden kann. Auch kann die Kieferrelation in einem durchgehenden Scandurchgang ohne Überlagerung der Scandaten erfasst werden, indem die Oberkiefer-Zähne und die Oberkiefer-Bissgabel 5 zusammen mit den Kieferrelationselementen 500 und anschließend während desselben Scanvorgangs, die Unterkiefer-Zähne zusammen mit den Kieferrelationselementen 500 erfasst werden.

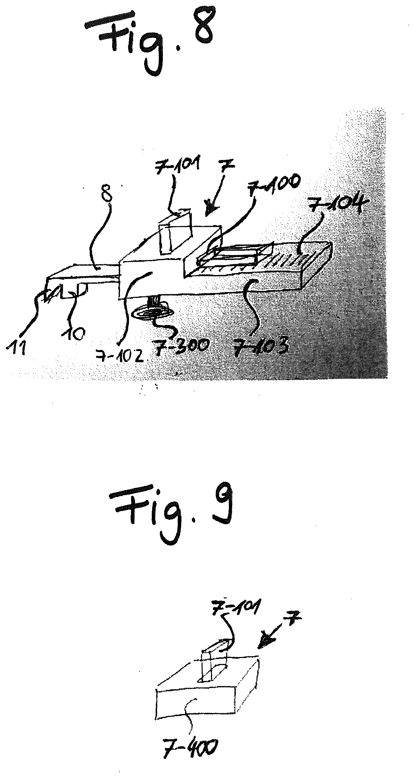

Fig. 8 zeigt eine weitere beispielhafte Ausführungsform einer Einrichtung 4 zur Einstellung einer Kieferrelationsposition. Hierbei wird das Kieferrelationselement 7 mit einem Zapfen 7-101 in die Aussparung 6-100 des Kieferrelationselements 6 gemäß der in Fig. 2 und Fig. 4 gezeigten Ausführungsform eingesetzt und mittels einer formschlüssigen Klemmpassung fixiert werden. Alternativ kann der Zapfen 7-101 auch zylindrisch ausgebildet sein und in die Aussparung 6-100 des Kieferrelationselements 6 gemäß der in Fig. 5 und Fig. 6 gezeigten Ausführungsform eingesetzt und mit einer fixiert werden. Durch die zylindrische Ausbildung des Zapfens 7-101 ist eine zusätzliche Verdrehung gegenüber dem Kieferrelationselement 6 möglich, welche mit dem Zapfen 7-101 wie in Fig. 8 abgebildet, nicht möglich ist.

Das Kieferrelationselement 7 ist stufenartig ausgebildet und weist einen Abschnitt 7-102 auf, der höher ist als ein zweiter Abschnitt 7-103. Das Kieferrelationselement 8 ist in einer Aussparung 7-100 des Kieferrelationselements 7, die als eine Durchgangsöffnung in dem Abschnitt 7-102 ausgebildet ist verschieblich aufgenommen und wird über eine Feststellschraube 7-300 in dem Abschnitt 7-102 in einer Position gegenüber dem Kieferrelationselement 7 festgelegt. Die Aussparung 7-100 ist dabei so ausgebildet, dass das Kieferrelationselement 8, wenn es in die Aussparung 7-100 eingesetzt ist und durch diese hindurchragt, auf einer Oberseite des Abschnitts 7-103 gleitet oder beabstandet zu dieser angeordnet ist. Somit wird das Kieferrelationselement 8 gegenüber dem Kieferrelationselement 7 so positioniert, dass die korrekte horizontale Kieferrelationsposition bzw. Kieferprotrusionsrelation eingestellt ist.

Optional kann eine Skala 7-104, bspw. in Millimeterschritten, auf dem Abschnitt 7-103 des Kieferrelationselements 7 vorgesehen sein, auf dem das Kieferrelationselement 8 gleitet. Die Skala ermöglicht somit eine Orientierung in der Horizontalen, womit die Ausgangs- und Endpositionen der Protrusionseinstellungen miteinander verglichen werden können.

Fig. 9 zeigt eine weitere Ausführungsform eines Kieferrelationselements 7, welches als eine Einrichtung zur Erfassung von Kieferrelationsdaten, bspw. in Form eines Scanners, ausgebildet ist. Das Kieferrelationselement 7 besitzt ein Erfassungselement bzw. eine Registriereinheit 7-400, die über einen Zapfen 7-101 in die Aussparung 6-100 des Kieferrelationselements 6 gemäß der in Fig. 2 und Fig. 4 gezeigten Ausführungsform mittels Klemmpassung einsetzbar ist. Auch hier ist es möglich, wie schon im Zusammenhang mit Fig. 8 beschrieben, den Zapfen 7-101 zylindrisch auszuführen und in die Aussparung 6-100 des Kieferrelationselements 6 gemäß der in Fig. 5 und Fig. 6 gezeigten Ausführungsform einzusetzen und mit einer Feststellschraube festzulegen.

Das Erfassungselement 7-400 registriert mittels eines optischen oder anderen Verfahrens, bspw. mit Hochfrequenz, Laser oder Ultraschall, die Position zumindest der Unterkieferzähne oder deren Anteile zur Bestimmung der Kieferrelationsposition zwischen dem Oberkiefer 3 und dem Unterkiefer 2.

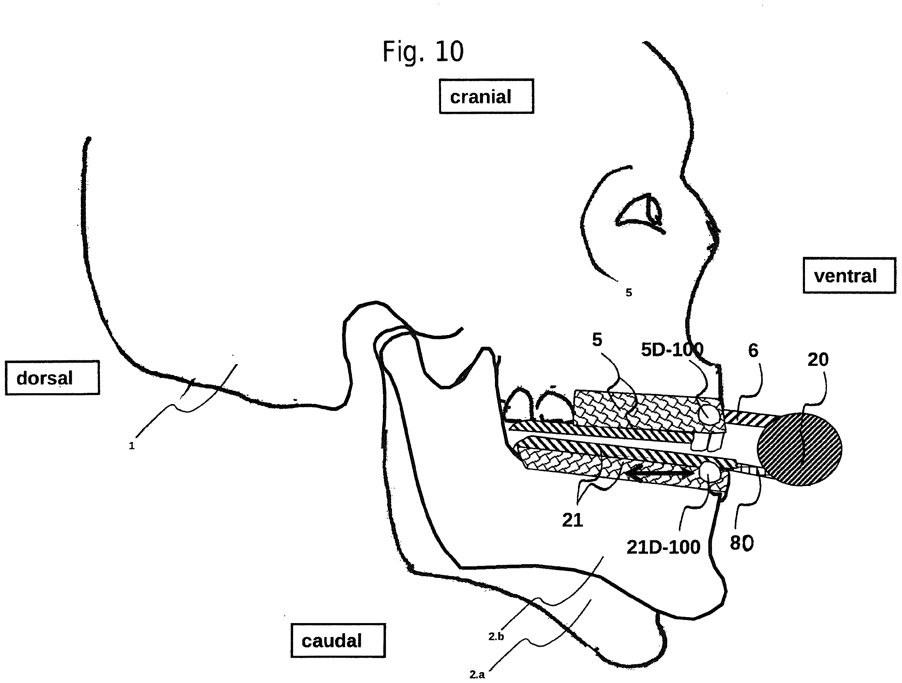

Fig. 10 zeigt einen beispielhaften Anwendungsfall für die erfindungsgemäße Oberkiefer-Bissgabel 5. Hierbei ist die Oberkiefer-Bissgabel 5 über das erste Kieferrelationselement 6 mit einem Motor 20 verbunden. Ferner ist auch eine Unterkiefer-Bissgabel 21, bspw. eine Paraokklusionsbissgabel, über ein Kieferrelationselement 80 mit dem Motor 20. Der Motor 20 ist extern ansteuerbar und dient dazu, die Kieferrelationsposition, in dem hier gezeigten Beispiel, eine Unterkieferprotrusionsposition 2.b des Unterkiefers 2, einzustellen. Somit kann der Motor 20 als eine Einrichtung zur Einstellung der Kieferrelationsposition betrachtet werden, welche eine motorgesteuerte, automatisierbare Einstellung der Kieferrelationsposition ermöglicht.

## Patentansprüche

1. Oberkiefer-Anlageelement zur Anlage an einem menschlichen Oberkiefer, das als eine zahnbogenförmige Oberkiefer-Bissgabel (5) ausgebildet ist, welche zumindest an den offenen Endabschnitten Aufnahmebereiche aufweist, die zur reversiblen, arbeitsstabilen Aufnahme, insbesondere unter Zuhilfenahme von Abdruckmasse, von Oberkiefer-Zahnkronen konfiguriert sind, und welche im Bereich eines Bogenscheitelpunkts mit wenigstens einem Kieferrelationselement (6, 7, 8, 500) verbindbar ist, das eine Einrichtung zur Einstellung oder Erfassung einer Kieferrelation und/oder Kieferrelationsbewegung eines Patienten ist, wobei die Oberkiefer-Bissgabel (5) mindestens eine Öffnung (5D-100) zum Befüllen zumindest eines Zwischenraums (5As) im Bereich (9) der Frontzahnkronen zwischen der Oberkiefer-Bissgabel (5) und dem Oberkiefer (3) wenn getragen aufweist, wobei die Oberkiefer-Bissgabel (5) auf der den Zahnkronen zugewandten Fläche mindestens einen Abstandshalter besitzt, der zur Ausrichtung der Oberkiefer-Bissgabel (5) derart ausgebildet ist, dass, wenn getragen, zwischen den Frontzahnkronen des Oberkiefers (3) und der Oberkiefer-Bissgabel (5) zumindest der Zwischenraum (5As) ausgebildet ist.

2. Oberkiefer-Anlageelement nach Anspruch 1, wobei die Aufnahmebereiche einen Bereich (9) der Frontzahnkronen und/oder Frontzahnkronenanteile (Z12-Z22) aussparen.

3. Oberkiefer-Anlageelement nach Anspruch 1 oder 2, wobei die Aufnahmebereiche distal von einem Bereich (9) der Frontzahnkronen (Z12-Z22) angeordnete Zahnkronen und/oder Zahnkronenanteile aussparen.

4. Oberkiefer-Anlageelement nach einem der Ansprüche 1 bis 3, wobei die Aufnahmebereiche einen Anteil (5C-108) aufweisen, der den Zahnkronen palatinal an und/oder nahe beiliegt oder beabstandet ist.

5. Oberkiefer-Anlageelement nach einem der Ansprüche 1 bis 4, wobei die Oberkiefer-Bissgabel (5) zumindest im Bereich (9) der Frontzahnkronen derart ausgebildet ist, dass das Zahnfleisch, zumindest teilweise das Vestibulum und zumindest teilweise die labialen Zahnkronenflächen verdeckt sind.

6. Oberkiefer-Anlageelement nach einem der Ansprüche 1 bis 5, wobei die Oberkiefer-Bissgabel (5) mit dem wenigstens einen Kieferrelationselement (6, 7, 8, 500) verbunden ist und/oder die Oberkiefer-Bissgabel (5) und das zumindest eine Kieferrelationselement (6, 7, 8, 500) integral ausgebildet sind.

7. Oberkiefer-Anlageelement nach einem der Ansprüche 1 bis 6, wobei die offenen Endabschnitte der Oberkiefer-Bissgabel (5) und die Aufnahmebereiche distal bündig zueinander ausgebildet sind.

8. Oberkiefer-Anlageelement nach einem der Ansprüche 1 bis 6, wobei die offenen Endabschnitte der Oberkiefer-Bissgabel (5) und die Aufnahmebereiche distal nicht bündig zueinander ausgebildet sind.

9. Oberkiefer-Anlageelement nach einem der Ansprüche 1 bis 8, wobei die Oberkiefer-Bissgabel (5) im Bereich (9) der Frontzahnkronen in cranialer-caudaler Richtung breiter ist als an den offenen Endabschnitten und sich entlang der cranial gelegenen Oberseite verjüngt.

10. Oberkiefer-Anlageelement nach einem der Ansprüche 1 bis 9, wobei die Oberkiefer-Bissgabel (5) zumindest eine Aussparung zur Aufnahme des zumindest einen Kieferrelationselements (6, 7, 8, 500) aufweist.

11. Oberkiefer-Anlageelement nach einem der Ansprüche 1 bis 10, wobei der mindestens eine Abstandshalter als ein Interdentalstift ausgebildet ist.

12. Oberkiefer-Anlageelement nach einem der Ansprüche 1 bis 11, wobei das zumindest eine Kieferrelationselement (500) beidseitig bukkal an der Oberkiefer-Bissgabel (5) angeordnet ist.

13. Oberkiefer-Anlageelement nach einem der Ansprüche 1 bis 2, wobei die Oberkiefer-Bissgabel (5) und/oder das zumindest eine Kieferrelationselement (6, 7, 8, 500) wenigstens eine Markierung (200) aufweist, die von einer Erfassungseinrichtung, insbesondere einem Intraoralscanner, erfassbar ist.

## Claims

1. An upper jaw fitting element for fitting to a human upper jaw, which is adapted as a dental arch-shaped upper jaw bite fork (5), which comprises, at least at the open end sections, receiving areas configured to reversibly receive, in particular with the aid of impression material, upper jaw tooth crowns in a manner as to be stable during manipulation, and which can be connected to at least one jaw relation element (6, 7, 8, 500) in the area of a vertex of the arch, which is a means for setting or detecting a jaw relation and/or a jaw relation movement of a patient, wherein the upper jaw bite fork (5) comprises at least one opening (50-100) for filling at least one intermediate space (5As) in the area (9) of the anterior tooth crowns between the upper jaw bite fork (5) and the upper jaw (3) when worn by the patient, wherein the upper jaw bite fork (5) comprises at least one spacer arranged on the surface facing the tooth crowns, which spacer is adapted for aligning the upper jaw bite fork (5) such that between the anterior tooth crowns of the upper jaw (3) and the upper jaw bite fork (5) at least the intermediate space (5As) is formed when worn by the patient.

2. The upper jaw fitting element according to claim 1, wherein the receiving areas leave out an area (9) of the anterior tooth crowns and/or anterior tooth crown portions (Z12- Z22).

3. The upper jaw fitting element according to claim 1 or 2, wherein the receiving areas leave out tooth crowns and/or tooth crown portions arranged distally to an area (9) of the anterior tooth crowns (Z12-Z22).

4. The upper jaw fitting element according to any of claims 1 to 3, wherein the receiving areas comprise a portion (5C-108) arranged palatally adjacent and/or close to or spaced apart from the tooth crowns.

5. The upper jaw fitting element according to any of claims 1 to 4, wherein the upper jaw bite fork (5) is formed at least in the area (9) of the anterior tooth crowns such that the gingiva, at least partially the vestibule and at least partially the labial tooth crown surfaces are concealed.

6. The upper jaw fitting element according to any of claims 1 to 5, wherein the upper jaw bite fork (5) is connected to the at least one jaw relation element (6, 7, 8, 500) and/or the upper jaw bite fork (5) and the at least one jaw relation element (6, 7, 8, 500) are integrally formed.

7. The upper jaw fitting element according to any of claims 1 to 6, wherein the open end sections of the upper jaw bite fork (5) and the receiving areas are formed distally flush with each other.

8. The upper jaw fitting element according to any of claims 1 to 6, wherein the open end sections of the upper jaw bite fork (5) and the receiving areas are not formed distally flush with each other.

9. The upper jaw fitting element according to any of claims 1 to 8, wherein the upper jaw bite fork (5) is, in the area (9) of the anterior tooth crowns, in the cranial-caudal direction wider than at the open end sections and tapers along the cranially located upper side.

10. The upper jaw fitting element according to any of claims 1 to 9, wherein the upper jaw bite fork (5) comprises at least one cut-out for receiving the at least one jaw relation element (6, 7, 8, 500).

11. The upper jaw fitting element according to any of claims 1 to 10, wherein the at least one spacer is adapted as an interdental pin.

12. The upper jaw fitting element according to any of claims 1 to 11, wherein the at least one jaw relation element (500) is arranged buccally on both sides of the upper jaw bite fork (5).

13. The upper jaw fitting element according to any of claims 1 to 2, wherein the upper jaw bite fork (5) and/or the at least one jaw relation element (6, 7, 8, 500) comprises at least one marking (200) which can be detected by a detection means, in particular an intraoral scanner.

## Revendications

1. Elément d'application pour mâchoire supérieure pour application à une mâchoire supérieure humaine, lequel est réalisé sous forme de fourchette occlusale pour mâchoire supérieure (5) en forme d'arcade dentaire qui comporte, au moins aux sections d'extrémité ouvertes, des zones de réception qui sont configurées pour recevoir, réversiblement et avec stabilité opérationnelle, en particulier à l'aide de pâte à empreintes, des couronnes dentaires de mâchoire supérieure, et qui peut, dans la zone d'un point de sommet d'arc, être reliée à au moins un élément de relation intermaxillaire (6, 7, 8, 500) qui est un dispositif de réglage ou de saisie d'une relation intermaxillaire et/ou d'un mouvement intermaxillaire d'un patient, cependant que la fourchette occlusale pour mâchoire supérieure (5) comporte au moins une ouverture (5D-100) pour le remplissage d'au moins un espace (5As) dans la zone (9) des couronnes dentaires frontales entre la fourchette occlusale pour mâchoire supérieure (5) et la mâchoire supérieure (3) quand elle est portée, cependant que
la fourchette occlusale pour mâchoire supérieure (5) possède sur la surface tournée vers les couronnes dentaires au moins un écarteur conçu de telle sorte pour l'orientation de la fourchette occlusale pour mâchoire supérieure (5) que, quand elle est portée, entre les couronnes dentaires frontales de la mâchoire supérieure (3) et la fourchette occlusale pour mâchoire supérieure (5), au moins l'espace (5As) est créé.

2. Elément d'application pour mâchoire supérieure selon la revendication 1, cependant que les zones de réception épargnent une zone (9) des couronnes dentaires frontales et/ou parties de couronnes dentaires frontales (Z12-Z22).

3. Elément d'application pour mâchoire supérieure selon la revendication 1 ou 2, cependant que les zones de réception épargnent des couronnes dentaires et/ou parties de couronnes dentaires disposées de manière distale par rapport à une zone (9) des couronnes dentaires frontales (Z12-Z22).

4. Elément d'application pour mâchoire supérieure selon une des revendications de 1 à 3, cependant que les zones de réception comportent une partie (5C-108) qui vient en appui contre les couronnes dentaires du côté palatal et/ou en est proche ou écarté.

5. Elément d'application pour mâchoire supérieure selon une des revendications de 1 à 4 cependant que la fourchette occlusale pour mâchoire supérieure (5) est réalisée de telle façon au moins dans une zone (9) des couronnes dentaires frontales que les gencives, au moins partiellement le vestibule et au moins partiellement les surfaces labiales des couronnes dentaires sont recouvertes.

6. Elément d'application pour mâchoire supérieure selon une des revendications de 1 à 5, cependant que la fourchette occlusale pour mâchoire supérieure (5) est reliée au au moins un élément de relation intermaxillaire (6, 7, 8, 500) et/ou que la fourchette occlusale pour mâchoire supérieure (5) et le au moins un élément de relation intermaxillaire (6, 7, 8, 500) sont réalisés sous forme intégrale.

7. Elément d'application pour mâchoire supérieure selon une des revendications de 1 à 6, cependant que les sections d'extrémité ouvertes de la fourchette occlusale pour mâchoire supérieure (5) et les zones de réception sont réalisées de manière distale alignée les unes par rapport aux autres.

8. Elément d'application pour mâchoire supérieure selon des revendications de 1 à 6, cependant que les sections d'extrémité ouvertes de la fourchette occlusale pour mâchoire supérieure (5) et les zones de réception sont réalisées de manière distale non alignée les unes par rapport aux autres.

9. Elément d'application pour mâchoire supérieure selon des revendications de 1 à 8, cependant que la fourchette occlusale pour mâchoire supérieure (5) est plus large dans la zone (9) des couronnes dentaires frontales en direction crâniale-caudale qu'aux sections d'extrémité ouvertes et va en s'effilant le long du côté supérieur crânial.

10. Elément d'application pour mâchoire supérieure selon des revendications de 1 à 9, cependant que la fourchette occlusale pour mâchoire supérieure (5) comporte au moins un évidement pour la réception du au moins un élément de relation intermaxillaire (6, 7, 8, 500).

11. Elément d'application pour mâchoire supérieure selon des revendications de 1 à 10, cependant que le au moins un écarteur est réalisé sous forme de tige interdentaire.

12. Elément d'application pour mâchoire supérieure selon des revendications de 1 à 11, cependant que le au moins un élément de relation intermaxillaire (500) est agencé buccalement des deux côtés dans la fourchette occlusale pour mâchoire supérieure (5).

13. Elément d'application pour mâchoire supérieure selon des revendications de 1 à 2, cependant que la fourchette occlusale pour mâchoire supérieure (5) et/ou le au moins un élément de relation intermaxillaire (6, 7, 8, 500) comporte au moins un marquage (200) pouvant être saisi par un équipement de saisie, en particulier un scanner intraoral.
